(19) **Europäisches Patentamt**
**European Patent Office**
**Office européen des brevets**

(11) **EP 4 585 537 A1**

(12) **EUROPEAN PATENT APPLICATION**
published in accordance with Art. 153(4) EPC

(43) Date of publication:
**16.07.2025 Bulletin 2025/29**

(51) International Patent Classification (IPC):
***B65G 1/137*** (2006.01)     ***B65G 1/04*** (2006.01)

(21) Application number: **23915352.1**

(22) Date of filing: **12.01.2023**

(52) Cooperative Patent Classification (CPC):
**B65G 1/1373; B65G 1/04; B65G 1/137;**
B65G 2203/0266

(86) International application number:
**PCT/CN2023/071957**

(87) International publication number:
**WO 2024/148582 (18.07.2024 Gazette 2024/29)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Hai Robotics Co., Ltd.**
**Shenzhen, Guangdong 518000 (CN)**

(72) Inventor: **OUYANG, Wenbo**
**Shenzhen, Guangdong 518000 (CN)**

(74) Representative: **Gulde & Partner**
**Patent- und Rechtsanwaltskanzlei mbB**
**Berliner Freiheit 2**
**10785 Berlin (DE)**

(54) **WAREHOUSE SHELVING RACK, WAREHOUSE SYSTEM, CONTAINER STORAGE METHOD AND DEVICE, AND STORAGE MEDIUM**

(57)     Embodiments of this application relate to the field of warehousing technologies, and specifically, to a warehousing shelving unit and system, a case storage method and apparatus, and a storage medium. The warehousing shelving unit includes a first bracket and a support part. The first bracket is configured to be disposed on a support surface. The support part includes at least one first support structure, and the first support structure is disposed on the first bracket along a first direction. The first support structure has at least two case placement modes. The first support structure is configured to support a plurality of cases of a same size. Sizes of cases corresponding to any two case placement modes are different. In embodiments of this application, storage utilization of shelving units and flexibility of warehousing scheduling are improved.

Figure 1

**Description**

TECHNICAL FIELD

Embodiments of this application relate to the field of warehousing technologies, and specifically, to a warehousing shelving unit and system, a case storage method and apparatus, and a storage medium.

BACKGROUND OF THE INVENTION

In logistics or manufacturing scenarios, goods need to undergo warehousing, sorting, inbound/outbound processing, and the like. Usually, a storage area, a workstation, and a warehousing robot are arranged in a warehouse. A plurality of shelving units are arranged in the storage area. Cases for storing goods are placed on the shelving units. The warehousing robot implements transport and storage of the cases between the shelving units and the workstation and between the shelving units.

Cases of a plurality of sizes are usually placed in the same warehouse. Cases of different sizes are used to store goods of different types, sizes, and/or quantities. If case placements on shelving units are not properly designed or planned, for example, if cases of different sizes are randomly placed in one shelving unit or a single shelving unit is used for placing only cases of one size, the shelving units and cases cannot properly adapt to each other. Consequently, storage utilization of the shelving units is low.

SUMMARY OF THE INVENTION

In view of the foregoing problems, embodiments of this application provide a warehousing shelving unit, a warehousing system, a case storage method, a case storage apparatus, and a computer-readable storage medium, to improve storage utilization of shelving units.

According to a first aspect of embodiments of this application, a warehousing shelving unit is provided, including a first bracket and a support part. The first bracket is configured to be disposed on a support surface. The support part includes at least one first support structure, and the first support structure is disposed on the first bracket along a first direction. The first support structure has at least two case placement modes. In each case placement mode, the first support structure is configured to support a plurality of cases of a same size. Sizes of cases corresponding to any two case placement modes are different.

In some embodiments, the support part includes a plurality of first support structures, the plurality of first support structures are arranged on the first bracket at spacings along a second direction, and the second direction is perpendicular to the first direction.

In some embodiments, the size of the case includes at least a length of the case in the first direction.

In some embodiments, the support part further includes at least one second support structure, and the second support structure and the first support structure are arranged on the first bracket at a spacing along the second direction, the second direction being perpendicular to the first direction. The second support structure has a case placement mode.

In some embodiments, the support part includes an identification code attached thereto, the identification code is used for a recognition device to recognize a corresponding storage location, each identification code corresponds to a storage location, and the number of identification codes is greater than or equal to the total number of cases able to be placed in all case placement modes of the support part.

In some embodiments, a distance between any two identification codes is greater than a preset distance, so that only one identification code exists in a field-of-view of the recognition device during identification.

In some embodiments, the first support structure includes at least two types of identification codes attached thereto, each type of identification code corresponds to a case placement mode, each identification code of each type of identification code corresponds to a storage location in a corresponding case placement mode, and each identification code is used for a recognition device to recognize a corresponding storage location.

According to a second aspect of embodiments of this application, a warehousing system is provided, including at least one first shelving unit and a warehousing robot. The first shelving unit is the foregoing warehousing shelving unit. The warehousing robot is configured to transport a case to the first shelving unit or transport the case away from the first shelving unit.

In some embodiments, the warehousing system further includes at least one second shelving unit. The second shelving unit includes a second bracket and at least one third support structure disposed on the second bracket. The third support structure has a first case placement mode. The first case placement mode corresponds to a first size.

In some embodiments, the warehousing system further includes at least one third shelving unit. The third shelving unit includes a third bracket and at least one fourth support structure disposed on the third bracket. The fourth support structure has a second case placement mode. The second case placement mode corresponds to a second size. The second size is different from the first size.

According to a third aspect of embodiments of this application, a case storage method is provided. The method is applied to the foregoing warehousing system and includes: acquiring target size information of a to-be-stored case; determining target storage space based on the target size information, the target storage space being storage space corresponding to the target size information in a shelving unit of the warehousing system;

and controlling a warehousing robot to transport and store the to-be-stored case to the target storage space.

In some embodiments, the determining target storage space based on the target size information includes: determining a target case placement mode corresponding to the target size information; determining free space conforming to the target size information in a support part having the target case placement mode; and determining the free space as the target storage space.

In some embodiments, the determining free space conforming to the target size information in a support part with the target case placement mode includes: determining whether a support part currently in the target case placement mode exists; and if a support part currently in the target case placement mode exists, determining free space conforming to the target size information in the support part currently in the target case placement mode.

In some embodiments, a warehousing shelving unit in which the support part currently in the target case placement mode is located is in the target case placement mode.

In some embodiments, the determining free space conforming to the target size information in the support part currently in the target case placement mode includes: determining whether a support part that is currently in the target case placement mode and that has only the target case placement mode has free space conforming to the target size information; if the support part has free space conforming to the target size information, determining free space conforming to the target size information in the support part that is currently in the target case placement mode and that has only the target case placement mode; and if the support part does not have free space conforming to the target size information, determining free space conforming to the target size information in a support part that is currently in the target case placement mode and that has at least two case placement modes, the at least two case placement modes including the target case placement mode.

In some embodiments, after the determining whether a support part currently in the target case placement mode exists, the method further includes: if no support part currently in the target case placement mode exists or a support part currently in the target case placement mode does not have the free space, determining free space conforming to the target size information in a support part that has the target case placement mode but is currently not locked to a case placement mode.

In some embodiments, the method further includes: locking, to the target case placement mode, a support part in which the target storage space is located and that has the target case placement mode but is currently not locked to a case placement mode.

In some embodiments, the method further includes: locking, to the target case placement mode, a shelving unit in which the target storage space is located.

In some embodiments, the method further includes: if no support part that has the target case placement mode but is currently not locked to a case placement mode exists, determining free space conforming to the target size information in a support part that has the target case placement mode but is currently locked to another case placement mode, the another case placement mode being a case placement mode other than the target case placement mode.

In some embodiments, the controlling a warehousing robot to transport and store the to-be-stored case to the target storage space includes: controlling the warehousing robot so that the warehousing robot walks to a ground location corresponding to the target storage space, aligns to the target storage space by recognizing an identification code corresponding to the target case placement mode, and transports and stores the to-be-stored case to the target storage space.

According to a fourth aspect of embodiments of this application, a case storage apparatus is provided. The apparatus is applied to the foregoing warehousing system and includes: an acquisition module, configured to acquire target size information of a to-be-stored case; a determining module, configured to determine target storage space based on the target size information, the target storage space being storage space corresponding to the target size information in a shelving unit of the warehousing system; and a control module, configured to control a warehousing robot to transport and store the to-be-stored case to the target storage space.

According to a fifth aspect of embodiments of this application, a warehousing shelving unit is provided, including a stand, a first support member, and a plurality of identification members. The first support member is arranged on the stand along a first direction. The first support member has a plurality of storage locations. The plurality of storage locations include a plurality of first storage locations arranged along the first direction and a plurality of second storage locations arranged along the first direction. The first storage location and the second storage location have different sizes along the first direction. The first storage location and the second storage location occupy a same area of the first support member. The plurality of first identification members are arranged on the first support member. The plurality of first identification members are in a one-to-one correspondence with the plurality of storage locations.

In some embodiments, the first identification member includes an identifier attached to the first support member, and the identifier is used for a recognition device to recognize a corresponding storage location.

In some embodiments, a distance between any two identifiers is greater than a preset distance, so that only one identifier exists in a field-of-view of the recognition device during identification.

In some embodiments, the identifier is a first-type identifier and a second-type identifier. The first-type identifier corresponds to the first storage location. The second-type identifier corresponds to the second storage location.

In some embodiments, the warehousing shelving unit further includes a second support member, the second support member is arranged on the stand along the first direction, and the second support member and the first support member are arranged at a spacing along a second direction. The second direction is perpendicular to the first direction. The second support member has a plurality of first storage locations or second storage locations arranged along the first direction. When the second support member has a plurality of first storage locations, the second support member is provided with a plurality of second identification members, and the plurality of second identification members are in a one-to-one correspondence with the plurality of first storage locations. When the second support member has a plurality of second storage locations, the second support member is provided with a plurality of third identification members, and the plurality of third identification members are in a one-to-one correspondence with the plurality of second storage locations.

According to a sixth aspect of embodiments of this application, a warehousing system is provided, including: a first shelving unit, the first shelving unit being the foregoing warehousing shelving unit; and a warehousing robot, configured to transport a case to or away from the first shelving unit.

In some embodiments, the warehousing system further includes a second shelving unit. The second shelving unit has a plurality of first storage locations. The second shelving unit is provided with a plurality of second identification members for a recognition device to recognize the first storage locations. The plurality of second identification members are in a one-to-one correspondence with the plurality of first storage locations.

In some embodiments, the warehousing system further includes a third shelving unit. The third shelving unit has a plurality of second storage locations. The third shelving unit is provided with a plurality of third identification members for the recognition device to recognize the second storage locations. The plurality of third identification members are in a one-to-one correspondence with the plurality of second storage locations.

According to a seventh aspect of embodiments of this application, a case storage method is provided, including: acquiring target size information of a to-be-stored case; determining a target storage location in a shelving unit based on the target size information, the target storage location being a storage location corresponding to the target size information, the shelving unit including at least one first shelving unit, the first shelving unit including a shelf and a plurality of first identification members arranged on the shelf, the shelf having a plurality of storage locations, the plurality of storage locations including a plurality of first storage locations arranged along a first direction and a plurality of second storage locations arranged along the first direction, the first storage location and the second storage location having different sizes along the first direction, the first storage location and the second storage location occupying a same area of the shelf, and the plurality of first identification members being in a one-to-one correspondence with the plurality of storage locations; and controlling a warehousing robot to transport and store the to-be-stored case to the target storage location.

In some embodiments, the determining a target storage location in a shelving unit based on the target size information includes: determining a storage location corresponding to the target size information; when it is determined that the target size information corresponds to the first storage location, determining whether a free first storage location exists in a shelving unit having the first storage location; and determining the free first storage location as the target storage location when it is determined that the free first storage location exists.

In some embodiments, the determining whether a free first storage location exists in a shelving unit having the first storage location includes: determining whether the free first storage location exists in the first shelving unit; and the determining the free first storage location as the target storage location when it is determined that the free first storage location exists includes: when it is determined that the free first storage location exists in the first shelving unit, determining the free first storage location in the first shelving unit as the target storage location.

In some embodiments, the shelf of the first shelving unit is able to be locked to a first storage location mode. The first storage location mode is a mode in which the first storage location is provided and the second storage location is not provided. The determining whether the free first storage location exists in the first shelving unit includes: determining whether the shelf of the first shelving unit includes a shelf locked to the first storage location mode; and when it is determined that the shelf of the first shelving unit includes a shelf locked to the first storage location mode, determining whether the free first storage location exists in the shelf locked to the first storage location mode.

In some embodiments, the first shelving unit is able to be locked to a first storage location mode. The first storage location mode is a mode in which the first storage location is provided and the second storage location is not provided. The determining whether the free first storage location exists in the first shelving unit includes: determining whether the first shelving unit includes a first shelving unit locked to the first storage location mode; and when it is determined that the first shelving unit includes a first shelving unit locked to the first storage location mode, determining whether the free first storage location exists in the first shelving unit locked to the first storage location mode.

In some embodiments, the shelf of the first shelving unit is able to be locked to a storage location mode. The storage location mode is a mode in which one type of storage location is provided and no other storage location is provided. The storage location mode includes a first storage location mode. The first storage location mode is a mode in which the first storage location is provided and the second storage location is not provided. The determining whether the free first storage location exists in the first shelving unit includes: determining whether the shelf of the first shelving unit includes a shelf not locked to a storage location mode; and when it is determined that the shelf of the first shelving unit includes a shelf not locked to a storage location mode, determining whether the free first storage location exists in the shelf not locked to a storage location mode. After the determining the free first storage location in the first shelving unit as the target storage location, the method further includes: locking, to the first storage location mode, a shelf in which the target storage location is located; or locking, to the first storage location mode, a shelving unit in which the target storage location is located.

In some embodiments, when it is determined that no shelf that is not locked to a storage location mode exists, determining whether the free first storage location exists in a shelf locked to another storage location mode. The another storage location mode is a storage location mode other than the first storage location mode.

In some embodiments, the shelving unit further includes at least one second shelving unit. The second shelving unit has a plurality of first storage locations. The second shelving unit is provided with a plurality of second identification members for a recognition device to recognize the first storage locations. The plurality of second identification members are in a one-to-one correspondence with the plurality of first storage locations. Before the determining whether the free first storage location exists in the first shelving unit, the method further includes: determining whether the free first storage location exists in the second shelving unit; when it is determined that the free first storage location exists in the second shelving unit, determining the free first storage location in the second shelving unit as the target storage location; and when it is determined that the free first storage location does not exist in the second shelving unit, performing the step of determining whether the free first storage location exists in the first shelving unit.

According to an eighth aspect of embodiments of this application, a case storage apparatus is provided, including: an acquisition module, configured to acquire target size information of a to-be-stored case; a determining module, configured to determine a target storage location in a shelving unit based on the target size information, the target storage location being a storage location corresponding to the target size information, the shelving unit including at least one first shelving unit, the first shelving unit including a shelf and a plurality of first identification members arranged on the shelf, the shelf having a plurality of storage locations, the plurality of storage locations including a plurality of first storage locations arranged along a first direction and a plurality of second storage locations arranged along the first direction, the first storage location and the second storage location having different sizes along the first direction, the first storage location and the second storage location occupying a same area of the shelf, and the plurality of first identification members being in a one-to-one correspondence with the plurality of storage locations; and a control module, configured to control a warehousing robot to transport and store the to-be-stored case to the target storage location.

According to a ninth aspect of embodiments of this application, a case storage device is provided, including at least one processor and a memory. The memory stores computer-executable instructions. The at least one processor executes the computer-executable instructions stored in the memory, so that the at least one processor performs the foregoing case storage method.

According to a tenth aspect of embodiments of this application, a computer-readable storage medium is provided. The computer-readable storage medium stores computer-executable instructions. When a processor executes the computer-executable instructions, the foregoing case storage method is implemented.

In embodiments of this application, a first support structure in a support part of a shelving unit is set to have at least two case placement modes, and a case placement mode corresponds to a case size. In each case placement mode, a plurality of cases of a same size may be placed in each first support structure, so that storage space of the first support structure of the shelving unit is fully utilized, and storage utilization of the shelving unit is improved. In addition, different case placement modes are used, so that the shelving unit can flexibly adapt to cases of different sizes. This also improves flexibility of warehousing scheduling.

The foregoing descriptions are merely brief descriptions of technical solutions of this application. To make technical means of this application clearer, technical solutions may be implemented according to the content of this specification. In addition, to make the foregoing and other objectives, features, and advantages of this application more obvious and comprehensible, specific embodiments of this application are described below.

BRIEF DESCRIPTION OF DRAWINGS

Various other advantages and benefits become clear to a person of ordinary skill in the art by reading the following detailed description of exemplary implementations. The accompanying drawings are merely used for illustrating exemplary implementations and are not intended to constitute a limitation on this application. Throughout the accompanying drawings, same reference signs are used to represent same components. In the accompanying drawings:

Figure 1 is a schematic diagram of a warehousing shelving unit and case placement modes thereof according to an embodiment of this application;

Figure 2 is a schematic structural diagram of a warehousing shelving unit according to another embodiment of this application;

Figure 3 is a schematic structural diagram of a warehousing shelving unit according to still another embodiment of this application;

Figure 4 is a schematic structural diagram of a warehousing shelving unit according to yet another embodiment of this application;

Figure 5 is a schematic diagram of a relationship between a recognition field-of-view of a recognition device and a distance between identification codes according to an embodiment of this application;

Figure 6 is a schematic top plan view of a warehousing system according to an embodiment of this application;

Figure 7 is a schematic top plan view of a warehousing system according to another embodiment of this application;

Figure 8 is a schematic top plan view of a warehousing system according to still another embodiment of this application;

Figure 9 is a schematic flowchart of a case storage method according to an embodiment of this application;

Figure 10 is a schematic structural diagram of a first case storage apparatus according to an embodiment of this application;

Figure 11 is a schematic diagram of a warehousing shelving unit and storage locations thereof according to an embodiment of this application;

Figure 12 is a schematic structural diagram of a warehousing shelving unit according to another embodiment of this application;

Figure 13 is a schematic structural diagram of a warehousing shelving unit according to still another embodiment of this application;

Figure 14 is a schematic diagram of a relationship between a recognition field-of-view of a recognition device and a distance between identification codes according to an embodiment of this application;

Figure 15 is a schematic top plan view of a warehousing system according to an embodiment of this application;

Figure 16 is a schematic top plan view of a warehousing system according to another embodiment of this application;

Figure 17 is a schematic top plan view of a warehousing system according to still another embodiment of this application;

Figure 18 is a schematic flowchart of a case storage method according to an embodiment of this application;

Figure 19 is a schematic structural diagram of a second case storage apparatus according to an embodiment of this application; and

Figure 20 is a schematic structural diagram of a case storage device according to an embodiment of this application.

Reference signs in the detailed description are as follows:

100: warehousing system; 10: warehousing shelving unit; 101: first shelving unit; 102: second shelving unit; 103: third shelving unit; 11: first bracket; 12: support part; 121: first support structure; 122: second support structure; 122a: first-type second support structure; 122b: second-type second support structure; 122c: third-type second support structure; 13: identification code; 131: first identification code; 132: second identification code; L11: first storage location; L12: second storage location; W11: first case placement mode; W12: second case placement mode;

200: warehousing system; 20: warehousing shelving unit; 201: first shelving unit; 202: second shelving unit; 203: third shelving unit; 21: stand; 221: first support member; 222: second support member; 222a: first-type second support member; 222b: second-type second support member; 23: first identification member; 231a: second identification member; 232a: third identification member; 231b: first-type identifier; 232b: second-type identifier; L21: first storage location; L22: second storage location; W21: first storage location mode; W22: second storage location mode;

C1: first case; C2: second case; C3: third case;

31: first warehousing robot; 32: second warehousing robot;

S: support surface; x: first direction; z: second direction; (d1, d2): distance between identification codes; v: field-of-view of a recognition device;

300: first case storage apparatus; 301: first acquisition module; 302: first determining module; 303: first control module; 400: second case storage apparatus; 401: second acquisition module; 402: second determining module; 403: second control module; and

500: case storage device; 501: processor; 502: memory; 503: computer-executable instructions.

DETAILED DESCRIPTION

Exemplary embodiments of this application are described in detail below with reference to the accompanying drawings. Although exemplary embodiments of this application are shown in the accompanying drawings, it should be understood that this application may be implemented in various forms and shall not be limited by the embodiments described herein.

Embodiments of technical solutions of this application are described in detail below with reference to the accompanying drawings. The following embodiments are merely intended to describe technical solutions of this application more clearly, and therefore merely serve as examples, but are not intended to limit the protection scope of this application.

Unless otherwise defined, meanings of all technical and scientific terms used in this specification are the same as those usually understood by a person skilled in the art to which this application belongs. The terms used in this specification are merely intended to describe objectives of specific embodiments, but not to limit this application. The terms "include", "have", and any variations thereof in this specification and the claims of this application as well as the brief description of drawings are intended to cover non-exclusive inclusion.

In descriptions of embodiments of this application, the technical terms "first", "second", and the like are merely intended to distinguish between different objects, and are not to be construed as indicating or implying relative importance or implicitly indicating the number, particular order, or primary-secondary relationship of technical features indicated thereby. In descriptions of embodiments of this application, "a plurality of" means two or more, unless otherwise explicitly and specifically defined.

An "embodiment" mentioned in this specification means that a specific feature, structure, or characteristic described with reference to the embodiment may be included in at least one embodiment of this application. The term appearing in various locations in this specification does not necessarily mean a same embodiment, and neither means an independent or alternative embodiment that is exclusive of other embodiments. It is explicitly or implicitly understood by a person skilled in the art that embodiments described in this specification may be combined with other embodiments.

In descriptions of embodiments of this application, the term "and/or" describes only an association relationship between associated objects and indicates that three relationships may exist. For example, A and/or B may indicate the following three cases: Only A exists, both A and B exist, and only B exists. In addition, the character "/" in this specification usually indicates an "or" relationship between the associated objects.

In descriptions of embodiments of this application, the term "a plurality of" means more than two (inclusive).

In descriptions of embodiments of this application, orientation or location relationships indicated by the technical terms "length", "width", "on", "below", "vertical", "horizontal", and the like are based on orientation or location relationships shown in the accompanying drawings, and are used only for ease and brevity of description of embodiments of this application, but not to indicate or imply that an indicated apparatus or component needs to have a specific orientation or needs to be constructed and operated in a specific orientation. Therefore, the terms are not to be construed as a limitation on this application.

In logistics or manufacturing scenarios, goods need to undergo warehousing, sorting, inbound/outbound processing, and the like. Usually, a storage area, a workstation, and a warehousing robot are arranged in a warehouse. A plurality of shelving units are arranged in the storage area. Cases for storing goods are placed on the shelving units. The warehousing robot implements transport and storage of the cases between the shelving units and the workstation and between the shelving units.

Cases of a plurality of sizes are usually placed in the same warehouse. Cases of different sizes are used to store goods of different types, sizes, and/or quantities. If case placements on shelving units are not properly designed or planned, the shelving units and cases cannot properly adapt to each other. Consequently, storage utilization of the shelving units is low. For example, cases of different sizes are randomly placed in one shelving unit. In this irregular random placement manner, space of the shelving unit may not be fully utilized, causing waste of the space of the shelving unit. Alternatively, a single shelving unit is used for placing only cases of one size. In this manner, flexibility of case placement is poor. This may reduce storage density of the shelving unit and reduce storage utilization of the shelving unit.

In some warehousing design solutions in the related art, a design solution for cases is improved to improve storage utilization of shelving units. For example, packaging cartons of goods in original cases usually have a plurality of size specifications, and the goods in original cases are transferred to logistics cases of unified specifications and then stored to a shelving unit. A size of the shelving unit adapts to sizes of the logistics cases of unified specifications. For example, a preset number of logistics cases may be placed in the shelving unit without leaving a large margin. In this solution, cased are replaced. This not only reduces storage efficiency, but also fails to meet application requirements of storing whole original cases and retrieving whole original cases.

In some other design solutions for shelving units, a shelving unit is designed to be compatible with cases of a largest size. For example, a single shelving unit can accommodate a maximum of three cases of the largest size. In this instance, the shelving unit is designed for placing only three cases. If cases placed in the shelving unit are all cases of the largest size, storage space of the shelving unit can be fully utilized. However, if three cases of other sizes are placed in the shelving unit, storage space is wasted. A smaller size of a case placed leads to a more serious waste of storage space.

Based on discovery of the foregoing problems, a shelving unit design is improved in this application to improve storage utilization of shelving units. The following further describes embodiments of this application with reference to the accompanying drawings.

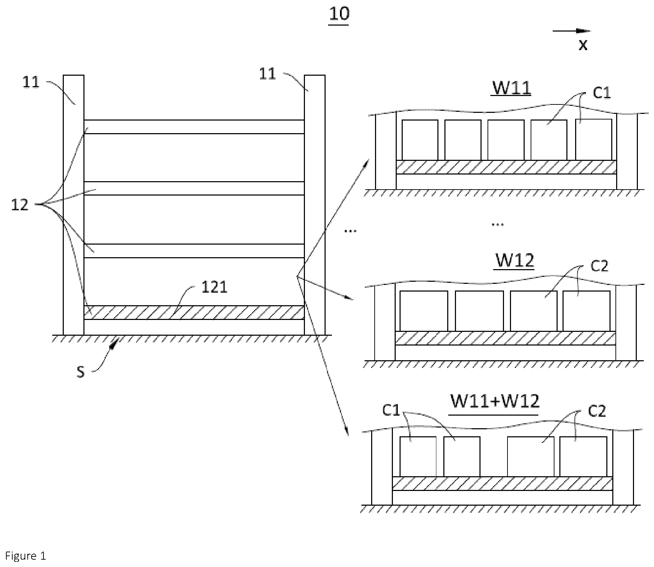

A plurality of shelving units are usually arranged in a warehouse, and the shelving units may be placed in different orientations. For ease of description, a first direction and a second direction in the following embodiments are defined based on a shelving unit coordinate system (namely, a user coordinate system or a relative coordinate system). The shelving units are placed in a storage area in different orientations, and the first direction and the second direction also vary in an entire storage area coordinate system (namely, a world coordinate system or an absolute coordinate system). In the following embodiments, an x direction in Figure 1 to Figure 4 and Figure 11 to Figure 13 is the first direction, and a z direction is the second direction. In addition, the first direction is a length direction of a shelving unit, and the second direction is a height direction of the shelving unit, unless otherwise specified.

Embodiments of this application provide a warehousing shelving unit. Figure 1 is a schematic diagram of a warehousing shelving unit and case placement modes thereof according to an embodiment of this application. The warehousing shelving unit 10 includes a first bracket 11 and a support part 12. The first bracket 11 is configured to disposed on a support surface S, for example, is disposed on a ground in a storage area. The support part 12 is used for placing a case. Support parts 12 may be classified into a plurality of types of support parts based on different case placement modes that the support parts have. The support part 12 in the warehousing shelving unit 10 shown in Figure 1 includes at least one first support structure 121. The first support structure 121 is disposed on the first bracket 11 along a first direction x. To be specific, a length direction of the first support structure 121 is the first direction.

A case placement mode is defined with respect to a size of a case (in other words, a type of a case) placed on the support part. For example, case types include a first case and a second case of different sizes, the first case has a first size, and the second case has a second size. In this instance, a first case placement mode is specially used for placing the first case, and the maximum number of first cases that can be placed is n1; and the second case placement mode is specially used for placing the second case, and the maximum number of second cases that can be placed is n2. The maximum number of cases that can be placed in each case placement mode is determined based on a size of the support part and a size of a case placed in the mode.

The first support structure 121 has at least two case placement modes. In each case placement mode, a plurality of cases of a same size may be placed on the first support structure 121. Sizes of placeable cases corresponding to any two case placement modes are different. For example, in the specific embodiment shown in Figure 1, the first support structure 121 has the first case placement mode W11 and the second case placement mode W12. The first case placement mode W11 is specially used for placing the first case C1, and the second case placement mode W12 is specially used for placing the second case C2.

Still refer to Figure 1. In the embodiment shown in Figure 1, the first bracket 11 is a column, and the support part 12 is a plate-like support part 12, namely, a support plate. In some embodiments, the size of the case includes at least a length of the case in the first direction x. Correspondingly, the maximum number of cases that can be placed on the first support structure 121 is determined based on a length of the first support structure 121 in the first direction x and the length of the case in the first direction x. In addition, an operation spacing between cases and between a case and the first bracket 11 to facilitate storage of each case further need to be considered. For example, the length of the first support structure 121 in the first direction x is 3800 cm, a length, in the first direction x, of the first case C1 placed in the first case placement mode W11 is 600 mm, and the operation spacing to facilitate storage of each case is 100 mm. In this instance, a maximum of five cases can be placed on the first support structure 121. The maximum number of cases that can be placed in each case placement mode is set based on the length of the first support structure 121 in the first direction x and the length of the case in the first direction x, so that space, along the length direction, in horizontal space of the shelving unit is fully utilized. In the specific embodiment shown in Figure 1, the first support structure 121 has the first case placement mode W11 and the second case placement mode W12. When the first support structure 121 functions in the first case placement mode W11, five first cases C1 can be placed. When the first support structure 121 functions in the second case placement mode W12, four second cases C2 can be placed.

In this embodiment of this application, the first support structure 121 in the support part 12 of the shelving unit is set to have at least two case placement modes, and a case placement mode corresponds to a case size. In each case placement mode, a plurality of cases of a same size may be placed in each first support structure 121, so that storage space of the first support structure 121 of the shelving unit is fully utilized, and storage utilization of the shelving unit is improved. In addition, different case placement modes are used, so that the shelving unit can flexibly adapt to cases of different sizes. This also improves flexibility of warehousing scheduling.

It can be understood that, in some embodiments, the first support structure 121 may be in two or more case placement modes at the same time. For example, the first support structure 121 may be in the first case placement mode W11 and the second case placement mode W12 at the same time. To be specific, the first support structure 121 may be used for placing both the first case C1 and the second case C2.

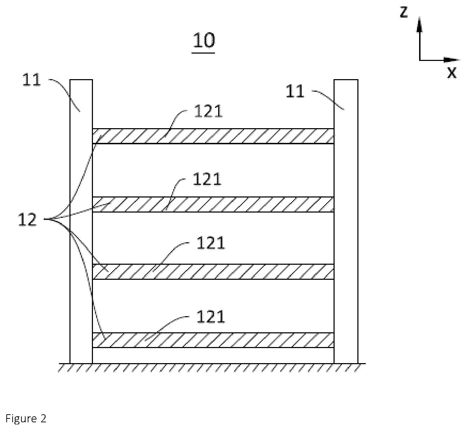

In some embodiments, as shown in Figure 2, the support part 12 includes a plurality of first support structures 121, the plurality of first support structures 121 are arranged on the first bracket 11 at spacings along a second direction z, and the second direction z is perpendicular to the first direction x.

Compared with an implementation in which only one support part 12 is disposed, a plurality of support parts 12 are disposed along the vertical direction z, so that vertical space of the shelving unit is fully utilized. This can increase the number of cases to be stored in the shelving unit, and therefore improve storage utilization of the shelving unit. In addition, different first support structures 121 in one warehousing shelving unit 10 may be set to a same case placement mode during a same time period to store cases of a same size, or may be set to different case placement modes to store cases of different sizes, so as to meet different warehousing scheduling requirements in different application scenarios.

In the specific embodiment shown in Figure 2, all support parts 12 of the warehousing shelving unit 10 are first support structures 121. To be specific, each support part 12 has at least two case placement modes. In some embodiments, alternatively, only some support parts 12 may be first support structures 121, and remaining support parts 12 are other types of support parts different from the first support structure 121.

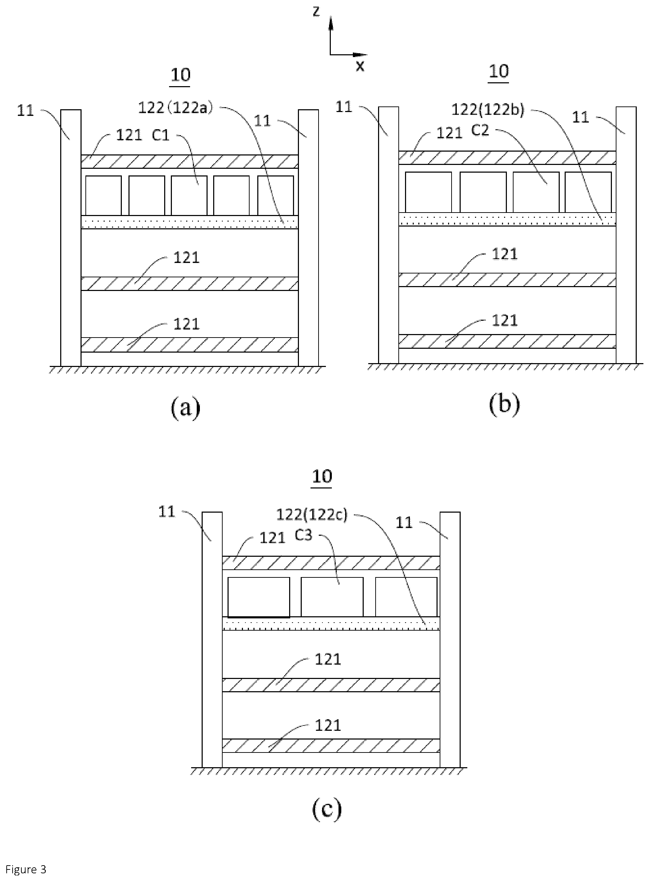

Figure 3 is a schematic structural diagram of a warehousing shelving unit according to still another embodiment of this application. As shown in Figure 3, a support part 12 includes not only a first support structure 121, but also at least one second support structure 122. The second support structure 122 and the first support structure 121 are arranged on a first bracket 11 at a spacing along a second direction z. The second support structure 122 has a case placement mode.

The case placement mode of the second support structure 122 may be any case placement mode, for example, may be one of case placement modes (a first case placement mode W11 or a second case placement mode W12) of the first support structure 121, or a case placement mode different from the case placement modes of the first support structure 121, for example, a third case placement mode or a fourth case placement mode.

As shown in (a) in Figure 3, a first-type second support structure 122a has only the first case placement mode W11 for placing a first case C1. As shown in (b) in Figure 3, a second-type second support structure 122b has only the second case placement mode W12 for placing a second case C2. As shown in (c) in Figure 3, a third-type second support structure 122c has only the third case placement mode for placing a third case C3.

The first support structure 121 having two case placement modes is disposed in the warehousing shelving unit 10, so that the warehousing shelving unit 10 can implement flexible storage and full utilization of storage space. On this basis, the second support structure 122 having only one case placement mode is further disposed, so that such support parts 12 implement storage of cases of fixed types. During storage of a case corresponding to the second support structure 122, no complex warehousing scheduling or operation of selecting or changing a case placement mode is required, thereby improving warehousing efficiency.

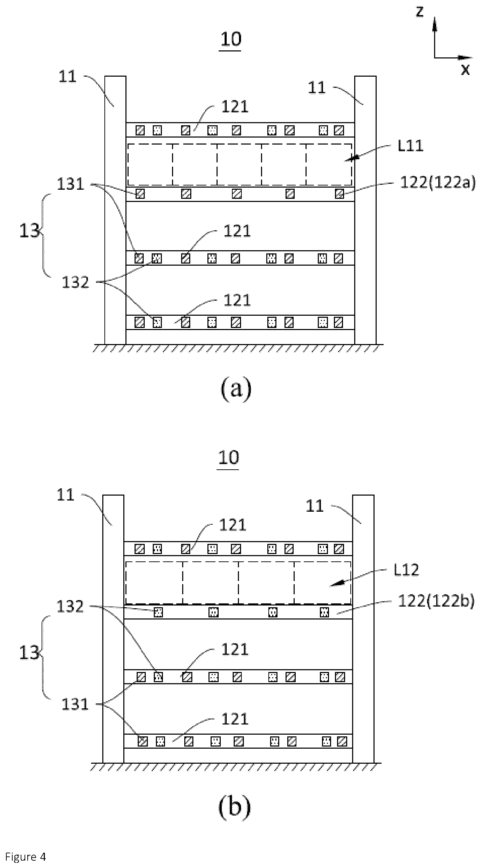

Figure 4 is a schematic structural diagram of a warehousing shelving unit according to yet another embodiment of this application. Based on the embodiment shown in Figure 3, an identification code 13 is added in the embodiment shown in Figure 4. For ease of illustration, a first support structure 121 and a second support structure 122 are not filled with patterns for distinguishing between them. As shown in Figure 4, a support part 12 includes an identification code 13 attached thereto. The identification code 13 is used for a recognition device to recognize a corresponding storage location. Each identification code 13 corresponds to a storage location. The number of identification codes 13 is greater than or equal the total number of cases able to be placed in all case placement modes of the support part 12.

The storage location is a location or an area for placing a case on the support part. Each storage location is used for placing one case. For example, there are two case placement modes, where a first case placement mode W11 corresponds to a first case, and a second case placement mode W12 corresponds to a second case. In this instance, a first storage location L11 is a storage location in the first case placement mode W11 and is used for placing the first case, and a second storage location L12 is a storage location in the second case placement mode W12 and is used for placing the second case.

The identification code 13 may be text or graphics.

If the support part has a plurality of case placement modes, one type of identification code 13 may be set for the plurality of case placement modes. In other words, a same identification code 13 is set for all the case placement modes. Alternatively, different identification codes 13 may be set for the case placement modes. Different identification codes 13 are used to identify storage locations in different case placement modes. For example, a first identification code 131 is used to identify the first storage location L11, and a second identification code 132 is used to identify the second storage location L12. Specifically, for example, if the identification code 13 is a number, the number "1" may be used to identify the first storage location L11, and the number "2" may be used to identify the second storage location L12. The graphics may be a line or other shapes, a two-dimensional code, a three-dimensional code, or a barcode, or the like, or may be various other graphics that are easy to recognize. For example, the identification code 13 is a barcode, where a first barcode is used to identify the first storage location L11, and a second barcode is used to identify the second storage location L12.

The recognition device may be a warehousing robot or a device located on a warehousing robot. The recognition device may read and recognize the identification code 13 by using an image sensor (for example, a camera or an optical scanner).

A corresponding identification code 13 is set on the support part 12 for each storage location in a case placement mode of the support part 12. To be specific, the number of identification codes 13 is at least the total number of cases that can be placed in the case placement mode of the support part 12. As shown in (a) in Figure 4, a first-type second support structure 122a has only the first case placement mode W11. In this mode, five cases can be placed. In this instance, five identification codes are attached to the first-type second support structure 122a to correspond to five storage locations thereof. As shown in (b) in Figure 4, a second-type second support structure 122b has only the second case placement mode W12. In this mode, four cases can be placed. In this instance, four identification codes are attached to the second-type second support structure 122b to correspond to four storage locations thereof.

A corresponding identification code 13 is set on the support part 12 for each storage location in each mode. To be specific, the number of identification codes 13 is at least the total number of cases that can be placed in all case placement modes of the support part 12. In the specific embodiment shown in Figure 4, the first support structure 121 has two case placement modes, five cases can be placed in the first case placement mode W11, and four cases can be placed in the second case placement mode W12. In this instance, at least nine (5+4=9) identification codes 13 are attached to the first support structure 121.

The identification code 13 may be sticked, sprayed, or painted on the support part 12, or may be fastened to the support part 12 through magnetic attraction, threaded connection, or the like. The identification code 13 in Figure 4 is located on a side surface, facing an aisle, of the support part 12. The aisle is an area between shelving units for a user or a warehousing robot to pass. The identification code 13 is set at a location shown in Figure 4, so that an access for storing goods is not blocked, and the identification code 13 can be recognized by the recognition device. A person skilled in the art should understand that the figure shows only an example. In other embodiments, a vertical plate may alternatively be disposed on another side of the support part 12 that is opposite to the access for picking and placing goods, and the identification code 13 is attached to the vertical plate. In this instance, the access for storing goods is not blocked either, and the identification code 13 can be recognized by the recognition device.

The identification code 13 is set for each storage location in a case placement mode of the support part 12, so that the recognition device can quickly recognize, based on the identification code 13, a storage location corresponding to a location at which the identification code 13 is attached. In this way, the warehousing robot can quickly place a case in a correct storage location in a case placement mode corresponding to the identification code 13, thereby improving case storage efficiency. In addition, accuracy of storage location positioning can be improved based on the identification code 13, to avoid placing a case at a location that deviates from a storage location and causing inconvenience to subsequent case placement.

In some embodiments, if identification codes 13 for different case placement modes are a same type of identification code 13, a distance between any two identification codes 13 needs to be greater than a preset distance, so that only one identification code 13 exists in a field-of-view of the recognition device during recognition of the identification code 13. The preset distance may be determined based on the field-of-view of the recognition device and a size of the identification code 13. For example, both the field-of-view of the recognition device and the identification code 13 are square, the preset distance is d, a width of the field-of-view of the recognition device is w1, and a width of the identification code 13 is w2. In this instance, $d \geq \frac{1}{2}w_1 - \frac{1}{2}w_2$.

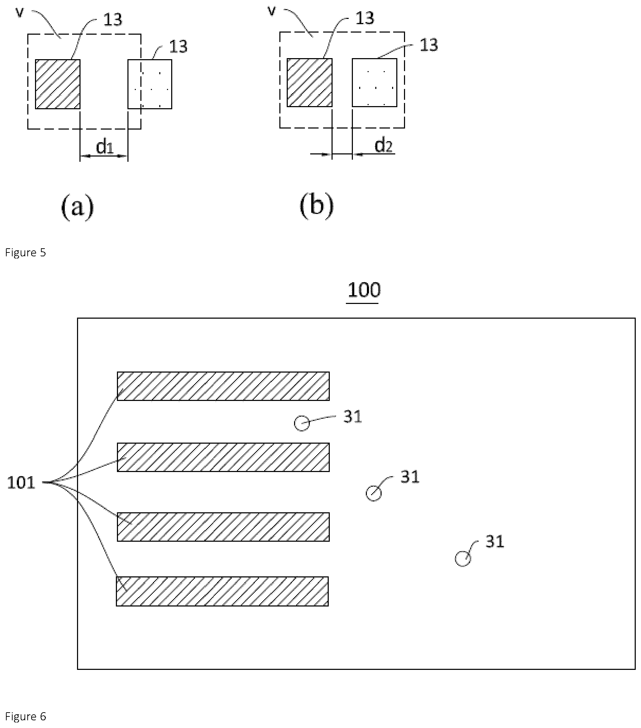

Figure 5 is a schematic diagram of a relationship between a recognition field-of-view of a recognition device and a distance between identification codes according to an embodiment of this application. As shown in (a) in Figure 5, a distance d1 between two identification codes 13 is greater than a preset distance, and only one identification code 13 exists in a field-of-view v of a recognition device. This ensures smooth recognition by the recognition device. As shown in (b) in Figure 5, a distance d2 between two identification codes 13 is less than the preset distance, and two same identification codes 13 exist in the field-of-view v of the recognition device. This affects recognition by the recognition device. The recognition device cannot identify a to-be-recognized identification code 13 from the two same identification codes 13.

A person skilled in the art should understand that, in other embodiments, a storage location may alternatively be identified by a storage location line or other means available for identifying the storage location, to enable the recognition device to recognize a corresponding storage location. For example, a storage location outline or a storage location boundary line may be drawn for each storage location, and different colors or patterns are used to distinguish between storage location arrangements in different case placement modes. For example, a red line identifies a storage location in a first case placement mode W11, and a blue line identifies a storage location in a second placement mode. This is not limited in this application. Identification may alternatively not be performed on a support part, and a warehousing robot aligns to target storage space and stores a case by using a vision algorithm.

Embodiments of this application further provide a warehousing system. Figure 6 is a schematic top plan view of a warehousing system according to an embodiment of this application. The warehousing system 100 includes at least one first shelving unit 101 and a first warehousing robot 31. The first shelving unit 101 is the warehousing shelving unit 10 in any one of the embodiments of Figure 1 to Figure 5. For details, refer to the foregoing descriptions. A specific structure of the first shelving unit 101 is not described in detail again herein. The first warehousing robot 31 is configured to transport a case to the first shelving unit 101 or transport a case away from the first shelving unit 101.

A first support structure is disposed in the first shelving unit of the warehousing system. The first support structure is set to have at least two case placement modes, and a case placement mode corresponds to a case size. In each case placement mode, a plurality of cases of a same size may be placed in each first support structure, so that storage space of the first support structure of the first shelving unit is fully utilized, and storage utilization of the first shelving unit is improved. In addition, different case placement modes are used, so that the first shelving unit can flexibly adapt to cases of different sizes. This also improves flexibility of warehousing scheduling.

A first support structure and a second support structure are disposed in the first shelving unit of the warehousing system. The first support structure has two case placement modes, so that the first shelving unit can implement flexible storage and full utilization of storage space. The second support structure has only one case placement mode, so that such support parts can implement storage of cases of fixed types. During storage of a case corresponding to the second support structure, no complex warehousing scheduling or operation of selecting or changing a case placement mode is required, thereby improving warehousing efficiency.

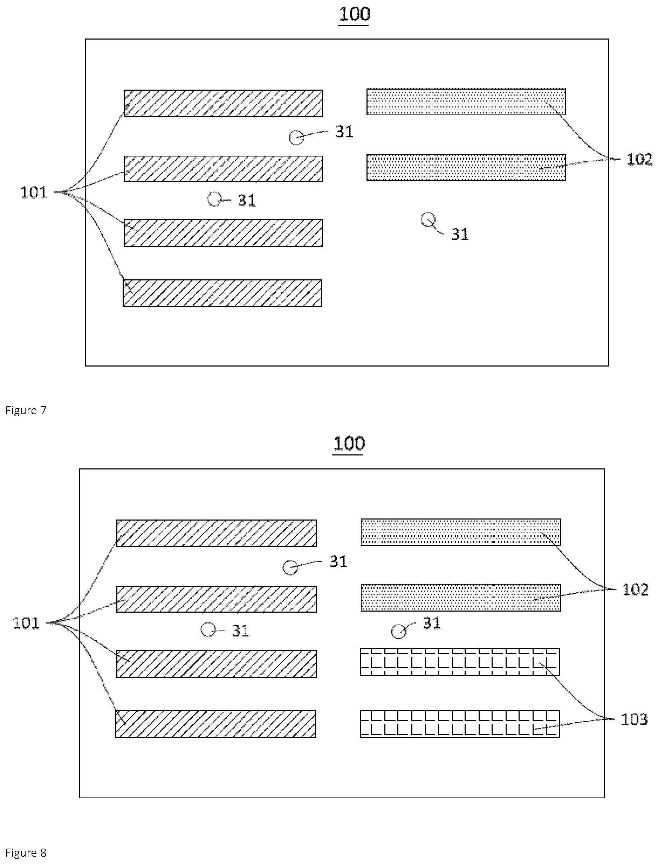

Figure 7 is a schematic top plan view of a warehousing system according to another embodiment of this application. As shown in Figure 7, the warehousing system 100 includes at least one first shelving unit 101 and at least one second shelving unit 102. The second shelving unit 102 includes a second bracket and at least one third support structure (for example, the first-type second support structure 122a shown in (a) in Figure 3) disposed on the second bracket. The third support structure has a first case placement mode, and the first case placement mode corresponds to a first size.

On the basis of the first shelving unit 101 in the warehousing system 100, the second shelving unit 102 is further disposed in the warehousing system 100, and the third support structure in the second shelving unit 102 has the first case placement mode. When a first case needs to be stored, a first case of the first size may be directly stored in the second shelving unit 102 without selecting or changing a case placement mode.

Figure 8 is a schematic top plan view of a warehousing system according to still another embodiment of this application. As shown in Figure 8, the warehousing system 100 includes at least one first shelving unit 101, at least one second shelving unit 102, and at least one third shelving unit 103. The third shelving unit includes a third bracket and at least one fourth support structure (for example, the second-type second support structure 122b shown in (b) in Figure 3) disposed on the third bracket. The fourth support structure has a second case placement mode. The second case placement mode corresponds to a second size. The second size is different from the first size.

On the basis of the first shelving unit 101 and the second shelving unit 102 in the warehousing system 100, the third shelving unit 103 is further disposed in the warehousing system 100, and the fourth support structure in the third shelving unit 103 has the second case placement mode. When a second case needs to be stored, a second case of the second size may be directly stored in the third shelving unit 103 without selecting or changing a case placement mode.

A case storage method for the warehousing system provided in the embodiments shown in Figure 6 to FIG. 8 is described below.

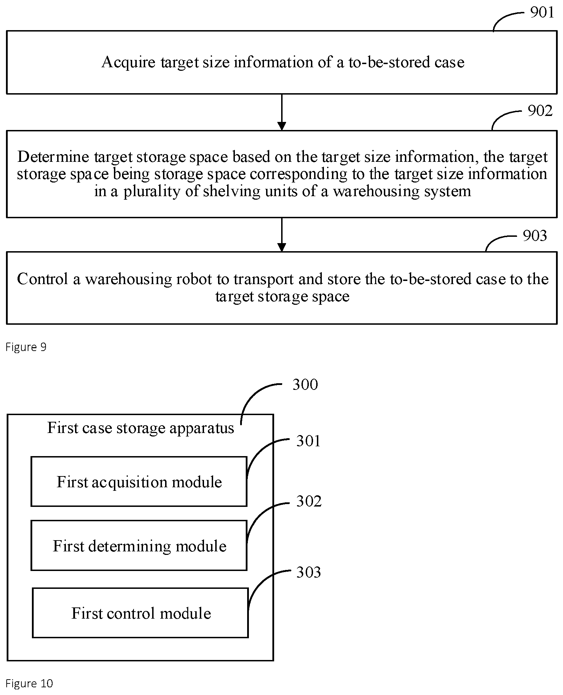

Embodiments of this application provide a case storage method. Figure 9 is a schematic flowchart of a case storage method according to an embodiment of this application. The method may be performed by a control platform (for example, a control server) of a warehousing system to schedule a warehousing robot to perform a case transport task in the warehousing system. The method includes the following steps:

Step 901: Acquire target size information of a to-be-stored case.

The target size information is size information of the to-be-stored case, for example, information about a length of the to-be-stored case in a first direction. A case identification code including size information may be set on a case, and size information of the case may be obtained by scanning the case identification code. For example, the case may be recognized as a first case with a first size by scanning the case identification code. The target size information of the to-be-stored case may alternatively be directly delivered by a background scheduling center. The background scheduling center sends, to a control platform, target size information of a to-be-stored case in a case transport task that currently needs to be performed.

Step 902: Determine target storage space based on the target size information, the target storage space being storage space corresponding to the target size information in a shelving unit of the warehousing system.

A database of the control platform stores information about a case placement mode of each support part of each warehousing shelving unit, information about a current case placement mode, information about a usage status of each storage location, and the like. The information about the case placement mode includes the case placement mode and a size or a type of a case that can be placed therein. For example, a support part at a first layer of the first shelving unit has a first case placement mode, and a first case can be placed in the first case placement mode. If a support part has at least two case placement modes, when the support part is not locked to a case placement mode, information about a current case placement mode of the support part is empty; and after the support part is locked to a case placement mode, information about a current case placement mode of the support part is the locked case placement mode. If a support part has only one case placement mode, a current case placement mode is always the case placement mode of the support part. The usage status of the storage location may include a used state and a free state.

After the target size information of the to-be-stored case is obtained, a specific shelving unit storage location, namely, the target storage space, may be determined for the case based on database information and a size of the case. The target storage space determined for the case needs to correspond to the size of the case. For example, target storage space for the first case with the first size needs to be set to be capable of storing the first case.

Step 903: Control the warehousing robot to transport and store the to-be-stored case to the target storage space.

The target storage space is determined, and a detailed location of the target storage space may be generated. Based on the detailed location of the target storage space, a transport path is set for the warehousing robot, to control the warehousing robot to transport and store the to-be-stored case to the target storage space. For example, the detailed location of the target storage space includes information about a ground location and a height that correspond to the target storage space. Coordinates of the target storage space are (X, Y, Z), where (X, Y) indicates the ground location corresponding to the target storage space, and Z indicates the height of the target storage space. A ground code is set on a ground in the warehousing system. The warehousing robot recognizes the ground code to move to the ground location (X, Y) corresponding to the target storage space, adjusts a height of the to-be-stored case on the warehousing robot based on Z, and then transports and stores the to-be-stored case to the target storage space after the height is adjusted in place.

In the case storage method in this embodiment of this application, the target storage space corresponding to the target size information in the shelving unit is determined based on the target size information of the to-be-stored case, and the warehousing robot is scheduled to transport the case. In this way, the shelving unit is flexibly configured to store cases of different sizes. This improves storage utilization of the shelving unit, and improves flexibility of warehousing scheduling.

In some embodiments, step 902 further includes the following steps:
Step a1: Determine a target case placement mode corresponding to the target size information.

First, a target case placement mode may be determined for the case based on the size of the case. For example, a target case placement mode for the first case with the first size is the first case placement mode.

Step a2: Determine free space conforming to the target size information in a support part having the target case placement mode.

The support part having the target case placement mode may be a first support structure that supports a plurality of case placement modes or a second support structure that supports one case placement mode. For example, the target case placement mode is the first case placement mode. In this instance, a shelving unit in which a first support structure supporting both the first case placement mode and a second case placement mode is located may be searched for free space, or a shelving unit in which a second support structure supporting only the first case placement mode is located may be searched for free space.

Step a3: Determine the free space as the target storage space.

The target case placement mode is determined based on the size of the case. Then free space corresponding to the target case placement mode is determined from the support part based on the target case placement mode and used as the target storage space. This manner of determining the target storage space is simple and convenient, so that efficiency of warehousing scheduling can be improved.

In some embodiments, step a2 further includes the following steps:
Step a21: Determine whether a support part currently in the target case placement mode exists.

For example, the target case placement mode is the first case placement mode. In this instance, the support part currently in the target case placement mode may include a first support structure in the first case placement mode or a second support structure having the first case placement mode.

Step a22: If a support part currently in the target case placement mode exists, determine free space conforming to the target size information in the support part currently in the target case placement mode.

In the foregoing manner, a support part in the target case placement mode may be preferentially searched for free space for placing the to-be-stored case. A first support structure not locked to a case placement mode is kept in a free state to the maximum extent, to flexibly adapt to cases of different sizes in subsequent warehousing scheduling and improve storage utilization of the shelving unit. If a support part that has not been locked to a case placement mode is preferentially searched for free space and a remaining free support part is a second support structure supporting only one case placement mode or a first support structure that has been locked to a case placement mode, flexibility of subsequent warehousing scheduling is reduced. For example, the remaining free support part includes a second support structure that supports only a third case placement mode (for placing a third case) and a first support structure that has been locked to the first case placement mode (for placing the first case). If the to-be-stored case is the second case, the remaining free support part cannot store the to-be-stored case.

In some embodiments, a unified case placement mode may be set for the entire warehousing shelving unit. To be specific, all support parts in the warehousing shelving unit are in a same case placement mode. During searching for a support part currently in the target case placement mode for the to-be-stored case, a warehousing shelving unit in which a support part currently in the target case placement mode is located may be preferentially selected. In this instance, all support parts in the shelving unit are used for placing cases of a same size. This facilitates subsequent sorting, storage, and retrieval of goods.

In some embodiments, step a22 further includes the following steps:

Step a221: Determine whether a support part that is currently in the target case placement mode and that has only the target case placement mode has free space conforming to the target size information.

Step a222: If the support part has free space conforming to the target size information, determine free space conforming to the target size information in the support part that is currently in the target case placement mode and that has only the target case placement mode.

Step a223: If the support part does not have free space conforming to the target size information, determine free space conforming to the target size information in a support part that is currently in the target case placement mode and that has at least two case placement modes, the at least two case placement modes including the target case placement mode.

In the foregoing manner, a support part used for placing only a case of the same size as that of the to-be-stored case is preferentially selected for case storage. When no support part meets the condition, a support part supporting a plurality of case placement modes is then searched for free space. The support part supporting a plurality of case placement modes is kept in a free state to the maximum extent, to flexibly adapt to cases of different sizes in subsequent warehousing scheduling and improve storage utilization of the shelving unit.

In some embodiments, after step a21, the method further includes the following steps:

Step a21': If no support part currently in the target case placement mode exists or a support part currently in the target case placement mode does not have the free space, determine free space conforming to the target size information in a support part that has the target case placement mode but is currently not locked to a case placement mode.

If no free space is found from a support part in the target case placement mode or no support part is currently in the target case placement mode, a support part that is currently not locked to a case placement mode but can be used to store the to-be-stored case of this size is searched for free space, to ensure smooth determining of free space.

In some embodiments, if a support part that meets the condition and that has the target case placement mode but is currently not locked to case placement mode is found, a support part in which the target storage space is located and that has the target case placement mode but is currently not locked to a case placement mode is locked to the target case placement mode, so that the support part is also used for placing cases of this size during subsequent scheduling. This implements uniformity and standardization of case storage.

In some embodiments, the shelving unit in which the target storage space is located may be further locked to the target case placement mode, so that all support parts of the shelving unit are used for placing cases of this size during subsequent scheduling. This further implements uniformity and standardization of case storage, and facilitates subsequent sorting, storage, and retrieval of goods.

In some embodiments, if no support part that is currently in the target case placement mode and that has only the target case placement mode exists and no support part that has the target case placement mode but is currently not locked to a case placement mode exists, free space conforming to the target size information is determined in a support part that has the target case placement mode but is currently locked to another case placement mode. The another case placement mode is a case placement mode other than the target case placement mode.

For example, the support part that has the target case placement mode but is currently locked to another case placement mode has at least two case placement modes, such as the first case placement mode and the second case placement mode. Assuming that the target case placement mode is the first case placement mode, the support part is a first support structure locked to the second case placement mode. When neither a support part that is currently in the target case placement mode and that has only the target case placement mode nor a support part that has the target case placement mode but is currently not locked to a case placement mode has free space conforming to the target size information, the free space may be determined in a support part that has the target case placement mode but is currently locked to another case placement mode. If the support part has the free space, the free space is determined as the target storage space, and the support part is identified in the system to record that the support part is currently storing cases of a plurality of sizes.

In some embodiments, step 903 further includes the following step:

Control the warehousing robot so that the warehousing robot walks to a ground location corresponding to the target storage space, aligns to the target storage space by recognizing an identification code corresponding to the target case placement mode, and transports and stores the to-be-stored case to the target storage space.

As described above, the support part may not be provided with an identification code, and the warehousing robot aligns to the target storage space and stores the case by using a vision algorithm. Alternatively, an identification code corresponding to a storage location in each case placement mode may be attached to the support part, and the warehousing robot may align to the target storage space and store the case by recognizing the identification code. If the support part has a plurality of case placement modes, one type of identification code may be set for the plurality of case placement modes, and two adjacent identification codes are spaced by a specific distance. Therefore, during identification code recognition by a recognition device of the warehousing robot, only one identification code exists in a field-of-view of the recognition device, to avoid recognition errors. Alternatively, different identification codes may be set for case placement modes. For example, an identification code corresponding to each storage location in the first case placement mode is a first identification code, and an identification code corresponding to each storage location in the second case placement mode is a second identification code.

For example, after the warehousing robot moves to the ground location (X, Y) and rises to the height Z, the warehousing robot aligns to the target storage space by recognizing an identification code attached to a support part corresponding to the height. For example, a location of the warehousing robot along a horizontal direction x is adjusted based on relative locations of the identification code and the warehousing robot, so that the case is placed, as far as possible, in a storage location centered in the identification code along the horizontal direction x to avoid interference with other cases.

Embodiments of this application provide a case storage apparatus, applied to the warehousing system 100 in the embodiments shown in Figure 6 to Figure 8. Figure 10 is a schematic structural diagram of a first case storage apparatus according to an embodiment of this application. As shown in Figure 10, the first case storage apparatus 300 includes a first acquisition module 301, a first determining module 302, and a first control module 303.

The first acquisition module 301 is configured to acquire target size information of a to-be-stored case.

The first determining module 302 is configured to determine target storage space based on the target size information, the target storage space being storage space corresponding to the target size information in a shelving unit of the warehousing system.

The first control module 303 is configured to control a warehousing robot to transport and store the to-be-stored case to the target storage space.

In some embodiments, the first determining module 302 is further configured to:

determine a target case placement mode corresponding to the target size information;
determine free space conforming to the target size information in a support part having the target case placement mode; and
determine the free space as the target storage space.

In some embodiments, when determining free space conforming to the target size information in a support part having the target case placement mode, the first determining module 302 further performs the following operations:

determining whether a support part currently in the target case placement mode exists; and
if a support part currently in the target case placement mode exists, determining free space conforming to the target size information in the support part currently in the target case placement mode.

In some embodiments, a warehousing shelving unit in which the support part currently in the target case placement mode is located is in the target case placement mode.

In some embodiments, when determining free space conforming to the target size information in the support part currently in the target case placement mode, the first determining module 302 further performs the following operations:

determining whether a support part that is currently in the target case placement mode and that has only the target case placement mode has free space conforming to the target size information;
if the support part has free space conforming to the target size information, determining free space conforming to the target size information in the support part that is currently in the target case placement mode and that has only the target case placement mode; and
if the support part does not have free space conforming to the target size information, determining free space conforming to the target size information in a support part that is currently in the target case placement mode and that has at least two case placement modes, the at least two case placement modes including the target case placement mode.

In some embodiments, after determining whether a support part currently in the target case placement mode exists, the first determining module 302 is further configured to:
if no support part currently in the target case placement mode exists or a support part currently in the target case placement mode does not have the free space, determine free space conforming to the target size information in a support part that has the target case placement mode but is currently not locked to a case placement mode.

In some embodiments, the first determining module 302 is further configured to: lock, to the target case placement mode, a support part in which the target storage space is located and that has the target case placement mode but is currently not locked to a case placement mode.

In some embodiments, the first determining module 302 is further configured to: lock, to the target case placement mode, a shelving unit in which the target storage space is located.

In some embodiments, the first determining module 302 is further configured to: if no support part that has the target case placement mode but is currently not locked to a case placement mode exists, determine free space conforming to the target size information in a support part that has the target case placement mode but is currently locked to another case placement mode, the another case placement mode being a case placement mode other than the target case placement mode.

In some embodiments, the first control module 303 is further configured to:

control the warehousing robot so that the warehousing robot walks to a ground location corresponding to the target storage space, aligns to the target storage space by recognizing an identification code corresponding to the target case placement mode, and transports and stores the to-be-stored case to the target storage space.

The first case storage apparatus in this embodiment is configured to perform the steps of the case storage method in the foregoing method embodiments. Principles and technical effects thereof are similar to those of the case storage method. Details are not described herein again.

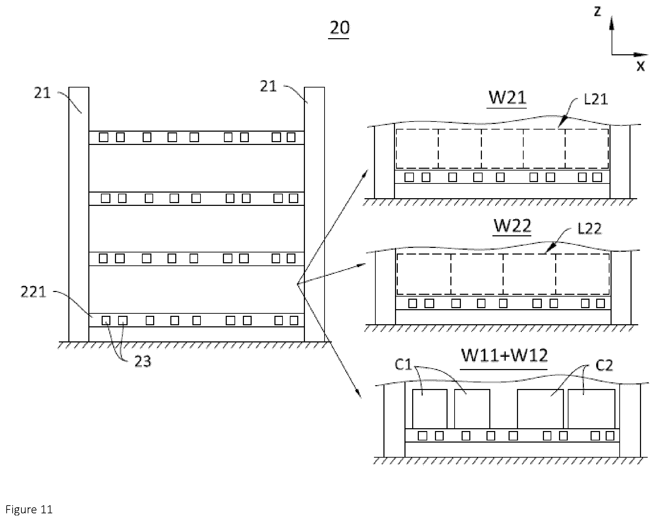

Embodiments of this application further provide a warehousing shelving unit. Figure 11 is a schematic diagram of a warehousing shelving unit and storage locations thereof according to an embodiment of this application. The warehousing shelving unit 20 includes a stand 21 and a first support member 221. The first support member 221 is used for placing a case and is disposed on the stand 21 along a first direction x. To be specific, a length direction of the first support member 221 is the first direction x. The first support member 221 has a plurality of storage locations. The plurality of storage locations include a plurality of first storage locations L21 arranged along the first direction x and a plurality of second storage locations L22 arranged along the first direction x. The first storage location L21 and the second storage location L22 have different sizes along the first direction x. The first storage location L21 and the second storage location L22 occupy a same area of the first support member 221. That is, on the first support member 221, an area with the first storage location L21 is the same as an area with the second storage location L22. To be specific, an area occupied by the first storage location L21 on the first support member 221 overlaps with an area occupied by the second storage location L22 on the first support member 221.

The storage location is a location or an area that is set on the support part for placing a case. Each storage location is used for placing one case. The first storage location L21 and the second storage location L22 are respectively used for placing cases corresponding to sizes of the storage locations. Sizes of the first storage location L21 and the second storage location L22 along the first direction x are set based on sizes of cases to be placed in the storage locations. For example, case types include a first case and a second case of different sizes, the first case has a first size, and the second case has a second size. In this instance, the first storage location L21 is specially used for placing the first case, and the number of first storage locations L21 is $n1$; and the second storage location L22 is specially used for placing the second case, and the number of second storage locations L22 is $n2$. The number of storage locations of each type is determined based on a size of the first support member 221 along the first direction x and sizes of cases to be placed in the storage locations. The size of the first support member 221 along the first direction x is fixed, and the number of storage spaces of each type is negatively correlated with the sizes of the cases to be placed in the storage locations. Larger sizes of cases to be placed correspond to a smaller number of storage locations.

The first support member 221 has at least two storage location modes. In each storage location mode, a plurality of cases of a same size may be placed on the first support member 221. Sizes of placeable cases corresponding to any two storage location modes are different. In the specific embodiment shown in Figure 11, the first support member 221 provides a first storage location mode W21 and a second storage location mode W22. In the first storage location mode W21, the first support member 221 provides the first storage location L21 for placing a first case corresponding to a size of the first storage location L21. For example, five first cases can be placed. In the second storage location mode W22, the first support member 221 provides the second storage location L22 for placing a second case corresponding to a size of the second storage location L22. For example, four second cases can be placed.

It can be understood that, in some embodiments, the first support member 221 may be in two or more storage location modes at the same time. For example, the first support member 221 may be in the first storage location mode and the second storage location mode at the same time. To be specific, the first support member 221 may be used for placing both the first case and the second case.

As shown in Figure 11, the first support member 221 is provided with a plurality of first identification members 23. The plurality of first identification members 23 are in a one-to-one correspondence with the plurality of storage locations. To be specific, each first storage location L21 and each second storage location L22 are provided with a first identification member 23 corresponding to the storage location.

In this embodiment of this application, two types of storage locations of different sizes are set on the first support member 221 of the shelving unit for placing cases of different sizes respectively, so that storage space of the first support member 221 of the shelving unit is fully utilized, and storage utilization of the shelving unit is improved. The first storage location L21 and the second storage location L22 can flexibly adapt to cases of different sizes. This improves flexibility of warehousing scheduling. In addition, each storage location is provided with a first identification member 23 in a one-to-one correspondence with the storage location, so that the storage location can be quickly recognized based on the first identification member 23. In this way, a case can be quickly placed in a storage location corresponding to a size of the case, thereby improving case storage efficiency. In addition, accuracy of storage location positioning can be improved based on the first identification member 23, to avoid placing a case at a location that deviates from a storage location and causing inconvenience to subsequent case placement.

In the specific embodiment shown in Figure 11, the warehousing shelving unit 20 includes a plurality of first support members 221, the plurality of first support members 221 are arranged on the stand 21 at spacings along a second direction z, and the second direction z is perpendicular to the first direction x. Compared with an implementation in which only one first support member 221 is provided, a plurality of first support members 221 are arranged along the vertical direction z, so that vertical space of the shelving unit is fully utilized. This can increase the number of cases to be stored in the shelving unit, and therefore improve storage utilization of the shelving unit. In addition, different first support members 221 in one warehousing shelving unit 20 may be set to a same storage location mode during a same time period to store cases of a same size, or may be set to different storage location modes to store cases of different sizes, so as to meet different warehousing scheduling requirements in different application scenarios.

In some embodiments, the warehousing shelving unit 20 includes only the first support member 221. To be specific, a first storage location L21 and a second storage location L22 are provided at each layer of the warehousing shelving unit 20. In some embodiments, the warehousing shelving unit 20 may further include other types of support parts different from the first support member 221.

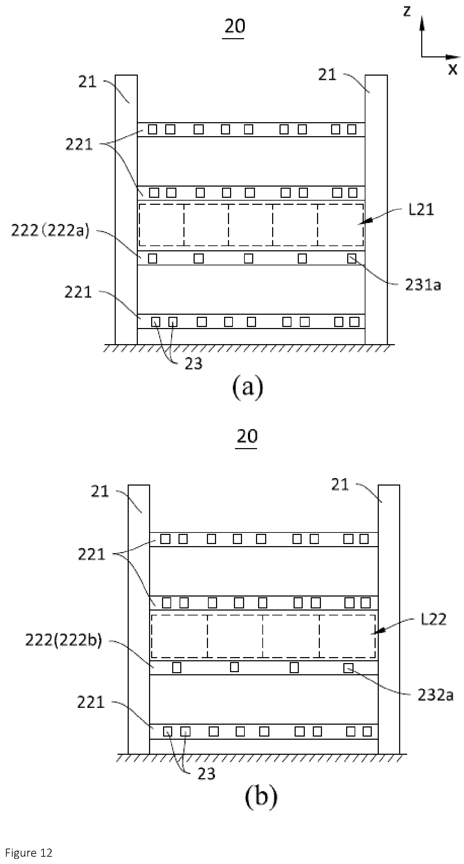

Figure 12 is a schematic structural diagram of a warehousing shelving unit according to another embodiment of this application. As shown in Figure 12, in addition to a first support member 221, the warehousing shelving unit 20 further includes a second support member 222. The second support member 222 is disposed on a stand 21 along a first direction x, and the second support member 222 and the first support member 221 are arranged at a spacing along a second direction z. The second support member 222 has a plurality of first storage locations L21 or second storage locations L22 arranged along the first direction x. As shown in (a) in Figure 12, the second support member 222 has a plurality of first storage locations L21 for placing first cases. The second support member 222 is provided with a plurality of second identification members 231a, and the plurality of second identification members 231a are in a one-to-one correspondence with the plurality of first storage locations L21. As shown in (b) in Figure 12, the second support member 222 has a plurality of second storage locations L22 for placing second cases. The second support member 222 is provided with a plurality of third identification members 232a, and the plurality of third identification members 232a are in a one-to-one correspondence with the plurality of second storage locations L22.

The first support member 221 having two types of storage locations is disposed in the warehousing shelving unit 20, so that the warehousing shelving unit 20 can implement flexible storage and full utilization of storage space. On this basis, the second support member 222 having only one type of storage location is further disposed, so that such support parts implement storage of cases of fixed types. During storage of a case corresponding to the second support member 222, no complex warehousing scheduling or operation of selecting or changing a storage location mode is required, thereby improving warehousing efficiency.

With respect to the first identification member 23, in some embodiments, the first identification member 23 includes an identifier attached to the first support member 221, and the identifier is used for a recognition device to recognize a corresponding storage location.

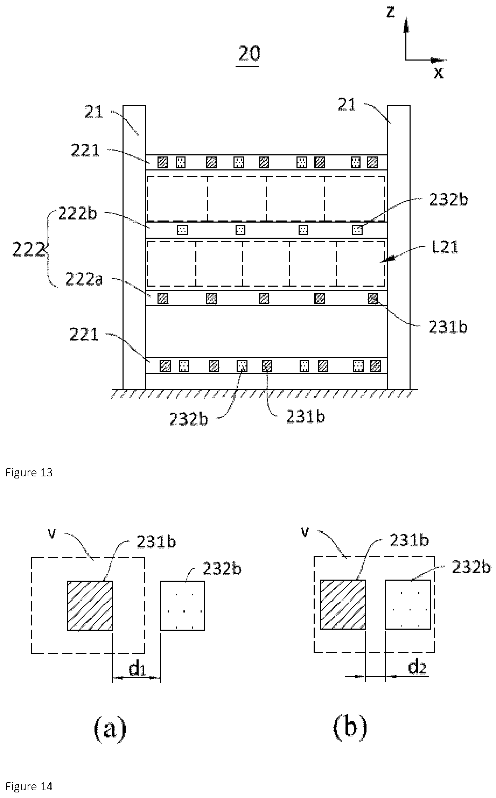

Further, Figure 13 is a schematic structural diagram of a warehousing shelving unit according to still another embodiment of this application. An identifier is a first-type identifier 231b and a second-type identifier 232b. The first-type identifier 231b corresponds to a first storage location L21. The second-type identifier 232b corresponds to a second storage location L22. It can be understood that a specific implementation form of a second identification member 231a may alternatively be the first-type identifier 231b, and a specific implementation form of a third identification member 232a may alternatively be the second-type identifier 232b.

The identifier may be text or graphics.

If a support part has a plurality of storage location modes, one type of identifier may be set for the plurality of storage location modes. In other words, a same identifier is set for all the storage location modes. Alternatively, different identifiers may be set for the storage location modes. Different identifiers are used to identify storage locations in different storage location modes. For example, if the identifier is a number, the number "1" may be used to identify the first storage location L21, and the number "2" may be used to identify the second storage location L22. The graphics may be a line or other shapes, a two-dimensional code, a three-dimensional code, or a barcode, or the like, or may be various other graphics that are easy to recognize. For example, the identifier is a barcode, where a first barcode is used to identify the first storage location L21, and a second barcode is used to identify the second storage location L22.

A recognition device may be a warehousing robot or a device located on a warehousing robot. The recognition device may read and recognize the identifier by using an image sensor (for example, a camera or an optical scanner).

The identifier may be sticked, sprayed, or painted on the support part, or may be fastened to the support part through magnetic attraction, threaded connection, or the like. The identifier in Figure 11 to Figure 13 is located on a side surface, facing an aisle, of the support part. The aisle is an area between shelving units for a user or a warehousing robot to pass. The identifier is set at a location shown in Figure 11 to Figure 13, so that an access for storing goods is not blocked, and the identifier can be recognized by the recognition device. A person skilled in the art should understand that the figures show only examples. In other embodiments, a vertical plate may alternatively be disposed on another side of the support part that is opposite to the access for picking and placing goods, and the identifier is attached to the vertical plate. In this instance, the access for storing goods is not blocked either, and the identifier can be recognized by the recognition device.

In some embodiments, if identifiers for different storage location modes are a same type of identifier, a distance between any two identifiers needs to be greater than a preset distance, so that only one identifier exists in a field-of-view of the recognition device during recognition of the identifier. The preset distance may be determined based on the field-of-view of the recognition device and a size of the identifier. For example, both the field-of-view of the recognition device and the identifier are square, the preset distance is d, a width of the field-of-view of the recognition device is w1, and a width of the identifier is w2. In this instance, $d \geq \frac{1}{2} w_1 - \frac{1}{2} w_2$.

Figure 14 is a schematic diagram of a relationship between a recognition field-of-view of a recognition device and a distance between identifiers according to an embodiment of this application. As shown in (a) in Figure 14, a distance d1 between any two identifiers (in the figure, a first-type identifier 231b and a second-type identifier 232b are used as examples) is greater than a preset distance, and only one identifier exists in a field-of-view v of a recognition device. This ensures smooth recognition by the recognition device. As shown in (b) in Figure 14, a distance d1 between any two identifiers (in the figure, a first-type identifier 231b and a second-type identifier 232b are used as examples) is less than the preset distance, and two same identifiers exist in the field-of-view v of the recognition device. This affects recognition by the recognition device. The recognition device cannot identify a to-be-recognized identifier from the two same identifiers 13.

A corresponding first identification member 23 is set on the support part for each storage location of the support part. To be specific, the number of first identification members 23 is at least the total number of storage locations of the support part. As shown in (a) in Figure 12, a first-type second support member 222a has only a first storage location L21 and can be used for placing five cases. In this instance, five first identification members 23 are attached to the first-type second support member 222a to correspond to five storage locations thereof. As shown in (b) in Figure 12, a second-type second support member 222b has only a second storage location L22 and can be used for placing four cases. In this instance, four first identification members 23 are attached to the second-type second support member 222b to correspond to four storage locations thereof.

With respect to the first support member 221, because the first support member 221 has two types of storage locations, the first support member 221 includes two types of first identification members 23 attached thereto, and each storage location is provided with a corresponding first identification member 23. The number of first identification members 23 is at least the total number of first storage locations L21 and second storage locations L22. Still as shown in Figure 12 and FIG. 13, the first support member 221 has five first storage locations L21 and four second storage locations L22. In this instance, at least nine (5+4=9) first identification members 23 are attached to the first support member 221.

A person skilled in the art should understand that, in other embodiments, the first identification member 23 may alternatively be a storage location line or other structures available for identifying a storage location, to recognize a corresponding storage location. For example, a storage location outline or a storage location boundary line may be drawn for each storage location, and different colors or patterns are used to distinguish between storage location arrangements in different storage location modes. For example, a red line identifies the first storage location L21, and a blue line identifies the second storage location L22. This is not limited in this application.

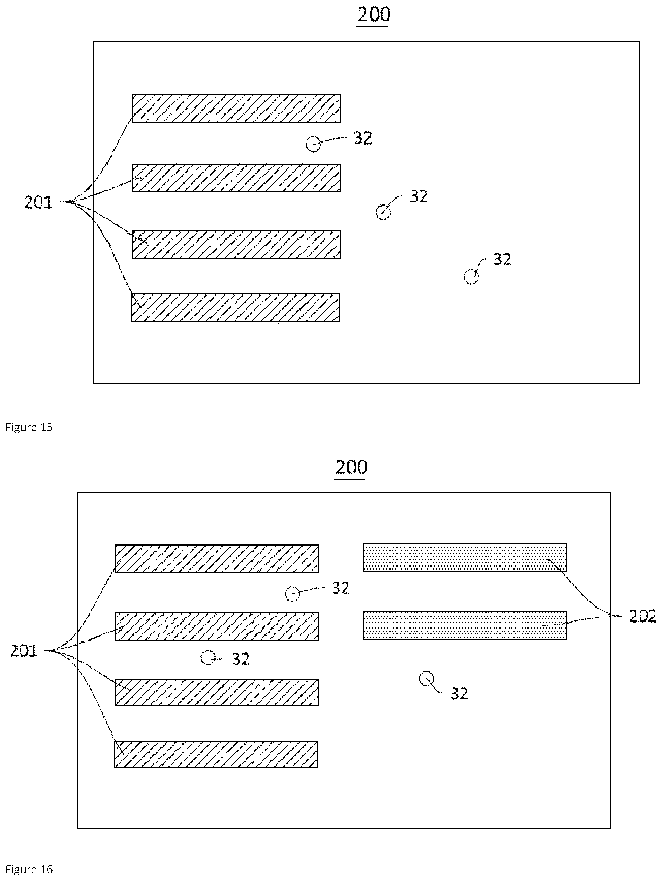

Embodiments of this application further provide a warehousing system. Figure 15 is a schematic top plan view of a warehousing system according to an embodiment of this application. The warehousing system 200 includes a first shelving unit 201 and a second warehousing robot 32. The first shelving unit 201 is the warehousing shelving unit 20 in the embodiments shown in Figure 11 to Figure 14. For details, refer to the foregoing descriptions. A specific structure of the first shelving unit 201 is not described in detail again herein. The second warehousing robot 32 is configured to transport a case to or away from the first shelving unit 201.

A first support member is disposed in the first shelving unit of the warehousing system, and two types of storage locations of different sizes are set on the first support member for placing cases of different sizes respectively, so that storage space of the first support member is fully utilized, and storage utilization of the first shelving unit is improved. A first storage location and a second storage location can flexibly adapt to cases of different sizes. This improves flexibility of warehousing scheduling. In addition, each storage location is provided with a first identification member in a one-to-one correspondence with the storage location, so that the storage location can be quickly recognized based on the first identification member. In this way, a case can be quickly placed in a storage location corresponding to a size of the case, thereby improving case storage efficiency. In addition, accuracy of storage location positioning can be improved based on the first identification member, to avoid placing a case at a location that deviates from a storage location and causing inconvenience to subsequent case placement.

Further, a first support member and a second support member are disposed in the first shelving unit of the warehousing system. The first support member has two types of storage locations, so that the first shelving unit can implement flexible storage and full utilization of storage space. The second support member has only one type of storage location, so that such support parts implement storage of cases of fixed types. During storage of a case corresponding to the second support member, no complex warehousing scheduling or operation of selecting or changing a storage location mode is required, thereby improving warehousing efficiency.

Figure 16 is a schematic top plan view of a warehousing system according to another embodiment of this application. As shown in Figure 16, the warehousing system 200 includes a first shelving unit 201 and a second shelving unit 202. The second shelving unit 202 has a plurality of first storage locations, and is provided with a plurality of second identification members for a recognition device to recognize the first storage locations. The plurality of second identification members are in a one-to-one correspondence with the plurality of first storage locations. It can be understood that the second shelving unit 202 may have only type of storage location. For example, the second shelving unit 202 has only a plurality of first storage locations and does not have a second storage location.

On the basis of the first shelving unit in the warehousing system, the second shelving unit is further disposed in the warehousing system, and the second shelving unit provides the first storage locations. When a first case needs to be stored, a first case of a first size may be directly stored in the second shelving unit without selecting or changing a storage location mode.

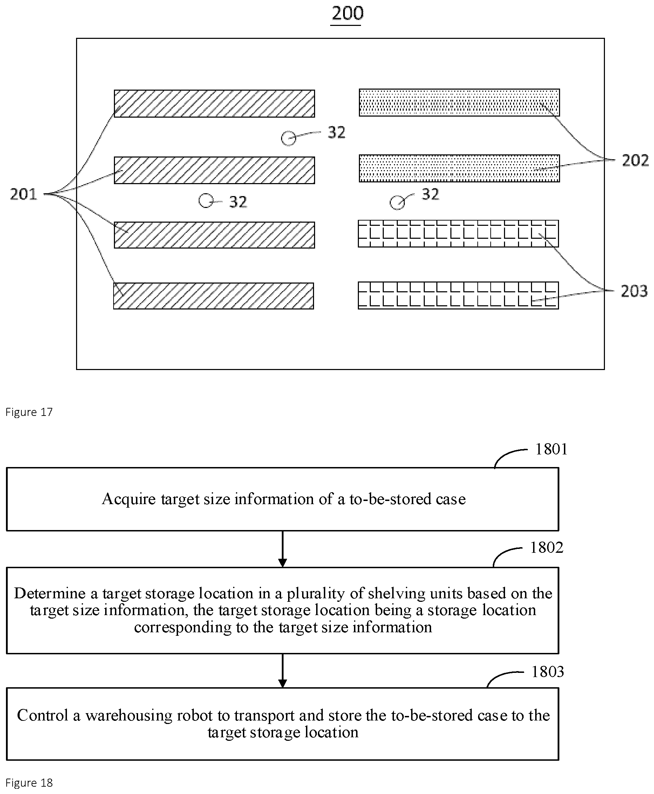

Figure 17 is a schematic top plan view of a warehousing system according to still another embodiment of this application. As shown in Figure 17, the warehousing system 200 includes a first shelving unit 201, a second shelving unit 202, and a third shelving unit 203. The third shelving unit 203 has a plurality of second storage locations, and is provided with a plurality of third identification members for a recognition device to recognize the second storage locations. The plurality of third identification members are in a one-to-one correspondence with the plurality of second storage locations. It can be understood that the third shelving unit 203 may have only one type of storage location. For example, the third shelving unit 203 has only the second storage locations and does not have a first storage location.

On the basis of the first shelving unit and the second shelving unit in the warehousing system, the third shelving unit is further disposed in the warehousing system, and the third shelving unit provides the second storage locations. When a second case needs to be stored, a second case of a second size may be directly stored in the third shelving unit without selecting or changing a storage location mode.

A case storage method for the warehousing system provided in the embodiments shown in Figure 15 to FIG. 17 is described below.

Embodiments of this application provide a case storage method. Figure 18 is a schematic flowchart of a case storage method according to an embodiment of this application. The method may be performed by a control platform (for example, a control server) of a warehousing system to schedule a warehousing robot to perform a case transport task in the warehousing system. The method includes the following steps:

Step 1801: Acquire target size information of a to-be-stored case.

The target size information is size information of the to-be-stored case, for example, information about a length of the to-be-stored case in a first direction. A case identification code including size information may be set on a case, and size information of the case may be obtained by scanning the case identification code. For example, the case may be recognized as a first case with a first size by scanning the case identification code. The target size information of the to-be-stored case may alternatively be directly delivered by a background scheduling center. The background scheduling center sends, to a control platform, target size information of a to-be-stored case in a case transport task that currently needs to be performed.

Step 1802: Determine a target storage location in a shelving unit based on the target size information, the target storage location being a storage location corresponding to the target size information.

The shelving unit includes at least one first shelving unit. The first shelving unit includes a shelf and a plurality of first identification members arranged on the shelf. The shelf has a plurality of storage locations. The plurality of storage locations include a plurality of first storage locations arranged along a first direction and a plurality of second storage locations arranged along the first direction. The first storage location and the second storage location have different sizes along the first direction, and the first storage location and the second storage location occupy a same area of the shelf. The plurality of first identification members are in a one-to-one correspondence with the plurality of storage locations.

A database of the control platform stores information about a storage location mode of each shelf (namely, the foregoing first support member and second support member) of each warehousing shelving unit, information about a usage status of each storage location, and the like. The information about the storage location mode includes the storage location mode and a size or a type of a case that can be placed therein. For example, a first shelf of the first shelving unit has a plurality of first storage locations and a plurality of second storage locations. The first storage locations may be enabled in a first storage location mode for placing first cases. The second storage locations may be enabled in a second storage location mode for placing second cases. The usage status of the storage location may include a used state and a free state.

After the target size information of the to-be-stored case is obtained, a specific shelving unit storage location, namely, the target storage location, may be determined for the case based on database information and a size of the case. The target storage location determined for the case needs to correspond to the size of the case. For example, a target storage location for the first case with the first size needs to be set to be capable of storing the first case.

Step 1803: Control the warehousing robot to transport and store the to-be-stored case to the target storage location.

The target storage location is determined, and a detailed location of the target storage location may be generated. Based on the detailed location of the target storage location, a transport path is set for the warehousing robot, to control the warehousing robot to transport and store the to-be-stored case to the target storage location. The warehousing robot may recognize the target storage location based on a first identification member provided on the shelf. For example, the detailed location of the target storage location includes information about a ground location and a height that correspond to the target storage location. Coordinates of the target storage location are (X, Y, Z), where (X, Y) indicates the ground location corresponding to the target storage location, and Z indicates the height of the target storage location. A ground code is set on a ground in the warehousing system. The warehousing robot recognizes the ground code to move to the ground location (X, Y) corresponding to the target storage location, adjusts a height of the to-be-stored case on the warehousing robot based on Z, and then transports and stores the to-be-stored case to the target storage location after the height is adjusted in place.

In the case storage method in this embodiment of this application, the target storage location corresponding to the target size information in the shelving unit is determined based on the target size information of the to-be-stored case, and the warehousing robot is scheduled to transport the case. In this way, the shelving unit is flexibly configured to store cases of different sizes.

This improves storage utilization of the shelving unit, and improves flexibility of warehousing scheduling.

In some embodiments, step 1802 further includes the following step:

Step b1: Determine a storage location corresponding to the target size information.

First, a corresponding storage location may be determined for the case based on the size of the case. For example, for the first case with the first size, the storage location corresponding to the target size information is the first storage location.

Step b2: When it is determined that the target size information corresponds to the first storage location, determine whether a free first storage location exists in a shelving unit having the first storage location.

In the first shelving unit, a support part having the first storage location may be a first support member having the first storage location and the second storage location or a second support member having only the first storage location. For example, the target size information corresponds to the first storage location. In this instance, a shelving unit in which the first support member is located may be searched for a free first storage location, or a shelving unit in which the second support member is located may be searched for a free first storage location.

Step b3: Determine the free first storage location as the target storage location when it is determined that the free first storage location exists.

A storage location type corresponding to the size of the case is determined based on the size. Then a shelving unit having this type of storage location is searched, based on the determined storage location type, for a free storage location of this type of storage location, and the free storage location is used as the target storage location. This manner of determining the target storage location is simple and convenient, so that efficiency of warehousing scheduling can be improved.

In some embodiments, the determining whether a free first storage location exists in a shelving unit having the first storage location in step b2 includes the following steps:

Step b21: Determine whether the free first storage location exists in the first shelving unit.

The first shelving unit is a shelving unit having only the first support member, or a shelving unit having both the first support member (which has the first storage location and the second storage location) and the second support member (which has the first storage location). Therefore, whether the free first storage location exists in the first shelving unit having the first storage location may be determined.

The determining the free first storage location as the target storage location when it is determined that the free first storage location exists in step b3 includes the following steps:

Step b31: When it is determined that the free first storage location exists in the first shelving unit, determine the free first storage location in the first shelving unit as the target storage location.

The first shelving unit having the first storage location is searched for the free first storage location. This avoids an ineffective operation of searching other shelving units without the first storage location for the free first storage location, thereby improving warehousing efficiency.

In some embodiments, a shelf in which the free first storage location determined as the target storage location is located is a shelf that has been locked to the first storage location mode. The first storage location mode is a mode in which the first storage location is provided and the second storage location is not provided. For example, step b21 may include the following steps: b211: Determine whether the shelf of the first shelving unit includes a shelf locked to the first storage location mode. b212: When it is determined that the shelf of the first shelving unit includes a shelf locked to the first storage location mode, determine whether the free first storage location exists in the shelf locked to the first storage location mode.

The first storage location mode provides the first storage location and does not provide the second storage location, and is used to store only a first case corresponding to a size of the first storage location. In the foregoing manner, a shelf that has been locked to the first storage location mode is preferentially searched for the free first storage location. A shelf that has not been locked to a storage location mode is kept in a free state to the maximum extent, to flexibly adapt to cases of different sizes in subsequent warehousing scheduling and improve storage utilization of the shelving unit. If a shelf that has not been locked to a storage location mode is preferentially searched for free space and a remaining free shelf is a shelf supporting only one storage location mode or a shelf that has been locked to a storage location mode, flexibility of subsequent warehousing scheduling is reduced. For example, the remaining free shelf includes a shelf that supports only a third storage location mode (for placing a third case) and a shelf that has been locked to the first storage location mode (for placing the first case). If the to-be-stored case is the second case, the remaining free shelf cannot store the to-be-stored case. In some embodiments, a unified storage location mode may be set for the entire shelving unit. To be specific, all shelves in the warehousing shelving unit are in a same storage location mode. In this implementation, the first shelving unit in which the free first storage location determined as the target storage location is located is a shelving unit that has been locked to the first storage location mode. In this instance, all shelves in the shelving unit are used for placing cases of a same size. This facilitates subsequent sorting, storage, and retrieval of goods. For example, step b21 may include the following steps: b211': Determine whether the first shelving unit includes a first shelving unit locked to the first storage location mode. b212': When it is determined that the first shelving unit includes a first shelving unit locked to the first storage location mode, determine whether the free first storage location exists in the first shelving unit locked to the first storage location mode.

In some embodiments, a shelf in which the free first storage location determined as the target storage location is located is a shelf not locked to a storage location mode. The storage location mode is a mode in which one type of storage location is provided and other types of storage locations are not provided. The shelf not locked to a storage location mode is a shelf that is currently not locked to the first storage location mode, the second storage location mode, or other storage location modes. For example, step b21 may include the following steps: b211": Determine whether the shelf of the first shelving unit includes a shelf not locked to a storage location mode. b212": When it is determined that the shelf of the first shelving unit includes a shelf not locked to a storage location mode, determine whether the free first storage location exists in the shelf not locked to a storage location mode. After the determining the free first storage location in the first shelving unit as the target storage location in step b31, the method further includes the following steps:

Step b4: Lock, to the first storage location mode, a shelf in which the target storage location is located.

If a target storage location that meets the condition is found, a shelf in which the target storage location is located is locked to the first storage location mode, where the first storage location mode is a mode in which only the first storage location is provided, so that the shelf is also used for placing cases of this size during subsequent scheduling. This implements uniformity and standardization of case storage.

In some embodiments, a shelving unit in which the target storage location is located may be further locked to the first storage location mode, to be specific, an entire shelving unit that provides the shelf in which the target storage location is located is locked to the storage location mode, so that all shelves of the shelving unit are used for placing cases of this size during subsequent scheduling. This further implements uniformity and standardization of case storage, and facilitates subsequent sorting, storage, and retrieval of goods.

In some embodiments, when it is determined that no shelf locked to the first storage location mode exists, or the free first storage location does not exist in a shelf locked to the first storage location mode, or no shelf that has not been locked to a storage location mode exists, whether the free first storage location exists in a shelf locked to another storage location mode is determined. The another storage location mode is a storage location mode other than the first storage location mode.

For example, the shelf locked to the another storage location mode may be a shelf of the first shelving unit, and has at least the plurality of first storage locations and the plurality of second storage locations described above, but is currently locked to a non-first storage location mode, for example, is currently locked to the second storage location mode, the third storage location mode, or the another storage location mode. When no shelf locked to the first storage location mode exists, or the free first storage location does not exist in a shelf locked to the first storage location mode, or no shelf that has not been locked to a storage location mode exists, whether the free first storage location exists in a shelf locked to another storage location mode may be determined. If the free first storage location exists, the free first storage location is determined as the target storage location, and the shelf is identified in the system to record that the shelf is currently storing cases of a plurality of sizes.

In some embodiments, the shelving unit of the warehousing system further includes at least one second shelving unit. The second shelving unit has a plurality of first storage locations. The second shelving unit is provided with a plurality of second identification members for a recognition device to recognize the first storage locations. The plurality of second identification members are in a one-to-one correspondence with the plurality of first storage locations. For example, the second shelving unit has only the first storage locations and does not have the second storage location. Before the determining whether the free first storage location exists in the first shelving unit in step b21, the method further includes the following steps:

Step b201: Determine whether the free first storage location exists in the second shelving unit.

Step b202: When it is determined that the free first storage location exists in the second shelving unit, determine the free first storage location in the second shelving unit as the target storage location.

Step b203: When it is determined that the free first storage location does not exist in the second shelving unit, perform step b21.

In the foregoing manner, the second shelving unit having the first storage location mode is preferentially searched for the free first storage location. To be specific, the second shelving unit used for placing only a case of the same size as that of the to-be-stored case is preferentially selected for case storage. This increases a centralized storage rate of cases of a same size. When no second shelving unit meets the condition, the first shelving unit supporting a plurality of storage location modes is then searched for the free first storage location. The first shelving unit supporting a plurality of storage location modes is kept in a free state to the maximum extent, to flexibly adapt to cases of different sizes in subsequent warehousing scheduling and improve storage utilization of the shelving unit.

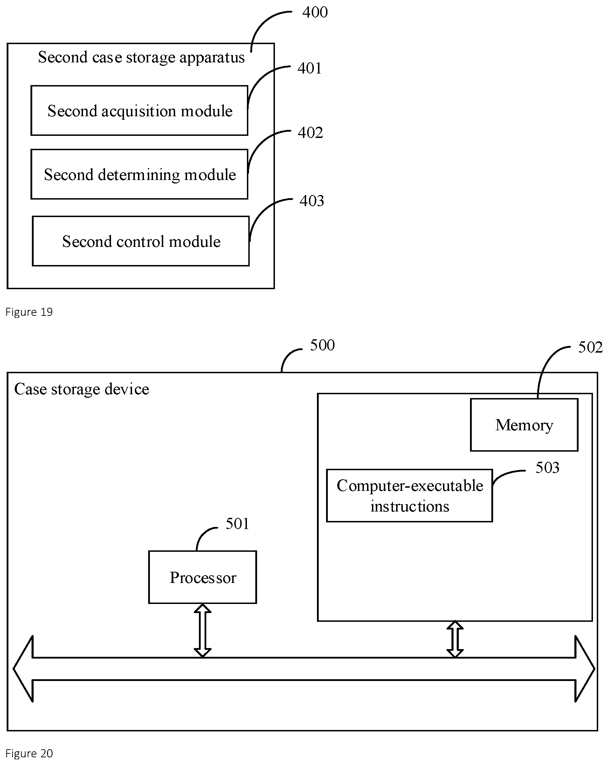

Embodiments of this application further provide a case storage apparatus, applied to the warehousing system in the embodiments shown in Figure 15 to Figure 17. Figure 19 is a schematic structural diagram of a second case storage apparatus according to an embodiment of this application. As shown in Figure 19, the second case storage apparatus 400 includes a second acquisition module 401, a second determining module 402, and a second control module 403.

The second acquisition module 401 is configured to acquire target size information of a to-be-stored case.

The second determining module 402 is configured to determine a target storage location in a shelving unit based on the target size information, the target storage location being a storage location corresponding to the target size information. The shelving unit includes at least one first shelving unit. The first shelving unit includes a shelf and a plurality of first identification members arranged on the shelf. The shelf has a plurality of storage locations. The plurality of storage locations include a plurality of first storage locations arranged along a first direction and a plurality of second storage locations arranged along the first direction. The first storage location and the second storage location have different sizes along the first direction, and the first storage location and the second storage location occupy a same area of the shelf. The plurality of first identification members are in a one-to-one correspondence with the plurality of storage locations.

The second control module 403 is configured to control a warehousing robot to transport and store the to-be-stored case to the target storage location.

In some embodiments, the second determining module 402 is further configured to:

determine a storage location corresponding to the target size information;
when it is determined that the target size information corresponds to the first storage location, determine whether a free first storage location exists in a shelving unit having the first storage location; and
determine the free first storage location as the target storage location when it is determined that the free first storage location exists.

In some embodiments, when determining whether a free first storage location exists in a shelving unit having the first storage location, the second determining module 402 further performs the following operation:

determining whether the free first storage location exists in the first shelving unit.

The determining the free first storage location as the target storage location when it is determined that the free first storage location exists includes:

when it is determined that the free first storage location exists in the first shelving unit, determining the free first storage location in the first shelving unit as the target storage location.

In some embodiments, a shelf in which the free first storage location determined as the target storage location is located is a shelf that has been locked to the first storage location mode. The first storage location mode is a mode in which the first storage location is provided and the second storage location is not provided.

In some embodiments, the first shelving unit in which the free first storage location determined as the target storage location is located is a shelving unit that has been locked to the first storage location mode. The first storage location mode is a mode in which the first storage location is provided and the second storage location is not provided.

In some embodiments, a shelf in which the free first storage location determined as the target storage location is located is a shelf not locked to the first storage location mode. The first storage location mode is a mode in which the first storage location is provided and the second storage location is not provided. After determining the free first storage location in the first shelving unit as the target storage location, the second determining module 402 is further configured to:

lock, to the first storage location mode, a shelf in which the target storage location is located; or
lock, to the first storage location mode, a shelf in which the target storage location is located.

In some embodiments, the shelving unit further includes at least one second shelving unit. The second shelving unit has a plurality of first storage locations. The second shelving unit is provided with a plurality of second identification members for a recognition device to recognize the first storage locations. The plurality of second identification members are in a one-to-one correspondence with the plurality of first storage locations. Before determining whether the free first storage location exists in the first shelving unit, the second determining module 402 is further configured to:

determine whether the free first storage location exists in the second shelving unit;
when it is determined that the free first storage location exists in the second shelving unit, determine the free first storage location in the second shelving unit as the target storage location; and
when it is determined that the free first storage location does not exist in the second shelving unit, perform the step of determining whether the free first storage location exists in the first shelving unit.

The second case storage apparatus in this embodiment is configured to perform the steps of the case storage method in the foregoing method embodiments. Principles and technical effects thereof are similar to those of the case storage method. Details are not described herein again.

Figure 20 is a schematic structural diagram of a case storage device according to an embodiment of this application. A specific implementation of the case storage device is not limited in specific embodiments of this application. As shown in Figure 20, the case storage device 500 includes at least one processor 501 and a memory 502. The processor 501 may be a central processing unit (CPU), an application-specific integrated circuit (ASIC), or one or more integrated circuits configured to implement embodiments of this application. One or more processors included in an electronic device may be one type of processor, for example, one or more CPUs; or may be different types of processors, for example, one or more CPUs and one or more ASICs. The memory 502 is configured to store computer-executable instructions 503. The memory 502 may include a high-speed random access memory (RAM), and may further include a non-volatile memory, for example, at least one disk memory. The processor 501 and the memory 502 may communicate with each other through a communications bus. The at least one processor 501 executes the computer-executable instructions 503 stored in the memory, so that the at least one processor 501 performs the case storage method in the foregoing embodiments.

Embodiments of this application provide a computer-readable storage medium. The computer-readable storage medium stores computer-executable instructions. When a processor executes the computer-executable instructions, the case storage method in any one of the foregoing embodiments is implemented.

Embodiments of this application provide a computer program product, including a computer program. When the computer program is executed by a processor, the case storage method in any one of the foregoing embodiments is implemented.

**Claims**

1. A warehousing shelving unit, comprising:

a first bracket configured to be disposed on a support surface; and
a support part comprising at least one first support structure, the first support structure being disposed on the first bracket along a first direction,
wherein the first support structure has at least two case placement modes, in each case placement mode, the first support structure is configured to support a plurality of cases of a same size, and sizes of cases corresponding to any two case placement modes are different.

2. The warehousing shelving unit according to claim 1, wherein the support part comprises a plurality of first support structures, the plurality of first support structures are arranged on the first bracket at spacings along a second direction, and the second direction is perpendicular to the first direction.

3. The warehousing shelving unit according to claim 1, wherein the size of the case comprises at least a length of the case in the first direction.

4. The warehousing shelving unit according to claim 1, wherein the support part further comprises at least one second support structure, and the second support structure and the first support structure are arranged on the first bracket at a spacing along the second direction, the second direction being perpendicular to the first direction; and the second support structure has a case placement mode.

5. The warehousing shelving unit according to any one of claims 1 to 4, wherein the support part comprises an identification code attached thereto, the identification code is used for a recognition device to recognize a corresponding storage location, each identification code corresponds to a storage location, and the number of identification codes is greater than or equal to the total number of cases able to be placed in all case placement modes of the support part.

6. The warehousing shelving unit according to claim 5, wherein a distance between any two identification codes is greater than a preset distance, so that only one identification code exists in a field-of-view of the recognition device during identification.

7. The warehousing shelving unit according to any one of claims 1 to 4, wherein the first support structure comprises at least two types of identification codes attached thereto, each type of identification code corresponds to a case placement mode, each identification code of each type of identification code corresponds to a storage location in a corresponding case placement mode, and each identification code is used for a recognition device to recognize a corresponding storage location.

8. A warehousing system, comprising at least one first shelving unit and a warehousing robot, the first shelving unit being the warehousing shelving unit according to any one of claims 1 to 7; and the warehousing robot being configured to transport a case to the first shelving unit or transport the case away from the first shelving unit.

9. The warehousing system according to claim 8, further comprising at least one second shelving unit, wherein the second shelving unit comprises a second bracket and at least one third support structure disposed on the second bracket, the third support structure has a first case placement mode, and the first case placement mode corresponds to a first size.

10. The warehousing system according to claim 9, further comprising at least one third shelving unit, wherein the third shelving unit comprises a third bracket and at least one fourth support structure disposed on the third bracket, the fourth support structure has a second case placement mode, the second case placement mode corresponds to a second size, and the second size is different from the first size.

11. A case storage method, appliable to the warehousing system according to any one of claims 8 to 10, and comprising:

acquiring target size information of a to-be-stored case;
determining target storage space based on the target size information, the target storage space being storage space corresponding to the target size information in a shelving unit of the warehousing system; and
controlling a warehousing robot to transport and store the to-be-stored case to the target storage space.

12. The method according to claim 11, wherein the determining target storage space based on the target size information comprises:

determining a target case placement mode corresponding to the target size information;
determining free space conforming to the target size information in a support part having the target case placement mode; and
determining the free space as the target storage space.

13. The method according to claim 12, wherein the determining free space conforming to the target size information in a support part with the target case placement mode comprises:

determining whether a support part currently in the target case placement mode exists; and
if a support part currently in the target case placement mode exists, determining free space conforming to the target size information in the support part currently in the target case placement mode.

14. The method according to claim 13, wherein a warehousing shelving unit in which the support part currently in the target case placement mode is located is in the target case placement mode.

15. The method according to claim 13, wherein the determining free space conforming to the target size information in the support part currently in the target case placement mode comprises:

determining whether a support part that is currently in the target case placement mode and that has only the target case placement mode has free space conforming to the target size information;

if the support part has free space conforming to the target size information, determining free space conforming to the target size information in the support part that is currently in the target case placement mode and that has only the target case placement mode; and

if the support part does not have free space conforming to the target size information, determining free space conforming to the target size information in a support part that is currently in the target case placement mode and that has at least two case placement modes, the at least two case placement modes comprising the target case placement mode.

16. The method according to claim 13, wherein after the determining whether a support part currently in the target case placement mode exists, the method further comprises:

if no support part currently in the target case placement mode exists or a support part currently in the target case placement mode does not have the free space, determining free space conforming to the target size information in a support part that has the target case placement mode but is currently not locked to a case placement mode.

17. The method according to claim 16, wherein the method further comprises: locking, to the target case placement mode, a support part in which the target storage space is located and that has the target case placement mode but is currently not locked to a case placement mode.

18. The method according to claim 16, wherein the method further comprises: locking, to the target case placement mode, a shelving unit in which the target storage space is located.

19. The method according to claim 16, wherein the method further comprises:

if no support part that has the target case placement mode but is currently not locked to a case placement mode exists, determining free space conforming to the target size information in a support part that has the target case placement mode but is currently locked to another case placement mode, the another case placement mode being a case placement mode other than the target case placement mode.

20. The method according to claim 11, wherein the controlling a warehousing robot to transport and store the to-be-stored case to the target storage space comprises:

controlling the warehousing robot so that the warehousing robot walks to a ground location corresponding to the target storage space, aligns to the target storage space by recognizing an identification code corresponding to the target case placement mode, and transports and stores the to-be-stored case to the target storage space.

21. A case storage apparatus, appliable to the warehousing system according to any one of claims 8 to 10, the device comprising:

an acquisition module, configured to acquire target size information of a to-be-stored case;

a determining module, configured to determine target storage space based on the target size information, the target storage space being storage space corresponding to the target size information in a shelving unit of the warehousing system; and

a control module, configured to control a warehousing robot to transport and store the to-be-stored case to the target storage space.

22. A warehousing shelving unit, comprising:

a stand;

a first support member arranged on the stand along a first direction, the first support member having a plurality of storage locations, the plurality of storage locations comprising a plurality of first storage locations arranged along the first direction and a plurality of second storage locations arranged along the first direction, the first storage location and the second storage location having different sizes along the first direction, and the first storage location and the second storage location occupying a same area of the first support member; and

a plurality of first identification members arranged on the first support member, the plurality of first identification members being in a one-to-one correspondence with the plurality of storage locations.

23. The warehousing shelving unit according to claim 22, wherein the first identification member comprises an identifier attached to the first support member, and the identifier is used for a recognition device to recognize a corresponding storage location.

24. The warehousing shelving unit according to claim 23, wherein a distance between any two identifiers is greater than a preset distance, so that only one identifier exists in a field-of-view of the recognition device during identification.

25. The warehousing shelving unit according to claim 23, wherein the identifier comprises a first-type identifier and a second-type identifier, the first-type identifier corresponds to the first storage location, and the second-type identifier corresponds to the second storage location.

26. The warehousing shelving unit according to claim 22, wherein the warehousing shelving unit further comprises a second support member, the second support member is arranged on the stand along the first direction, and the second support member and the first support member are arranged at a spacing along a second direction;

     the second direction is perpendicular to the first direction, and the second support member has a plurality of first storage locations or second storage locations arranged along the first direction; when the second support member has a plurality of first storage locations, the second support member is provided with a plurality of second identification members, and the plurality of second identification members are in a one-to-one correspondence with the plurality of first storage locations; and
     when the second support member has a plurality of second storage locations, the second support member is provided with a plurality of third identification members, and the plurality of third identification members are in a one-to-one correspondence with the plurality of second storage locations.

27. A warehousing system, comprising:

     a first shelving unit, the first shelving unit being the warehousing shelving unit according to any one of claims 22 to 26; and
     a warehousing robot, configured to transport a case to or away from the first shelving unit.

28. The warehousing system according to claim 27, further comprising a second shelving unit; wherein the second shelving unit has a plurality of first storage locations; and
     the second shelving unit is provided with a plurality of second identification members for a recognition device to recognize the first storage locations, and the plurality of second identification members are in a one-to-one correspondence with the plurality of first storage locations.

29. The warehousing system according to claim 28, further comprising a third shelving unit; wherein the third shelving unit has a plurality of second storage locations; and
     the third shelving unit is provided with a plurality of third identification members for the recognition device to recognize the second storage locations, and the plurality of third identification members are in a one-to-one correspondence with the plurality of second storage locations.

30. A case storage method, comprising:

     acquiring target size information of a to-be-stored case;
     determining a target storage location in a shelving unit based on the target size information, the target storage location being a storage location corresponding to the target size information, the shelving unit comprising at least one first shelving unit, the first shelving unit comprising a shelf and a plurality of first identification members arranged on the shelf, the shelf having a plurality of storage locations, the plurality of storage locations comprising a plurality of first storage locations arranged along a first direction and a plurality of second storage locations arranged along the first direction, the first storage location and the second storage location having different sizes along the first direction, the first storage location and the second storage location occupying a same area of the shelf, and the plurality of first identification members being in a one-to-one correspondence with the plurality of storage locations; and
     controlling a warehousing robot to transport and store the to-be-stored case to the target storage location.

31. The case storage method according to claim 30, wherein the determining a target storage location in a shelving unit based on the target size information comprises:

     determining a storage location corresponding to the target size information;
     when it is determined that the target size information corresponds to the first storage location, determining whether a free first storage location exists in a shelving unit having the first storage location; and
     determining the free first storage location as the target storage location when it is determined that the free first storage location exists.

32. The case storage method according to claim 31, wherein the determining whether a free first storage location exists in a shelving unit having the first storage location comprises:

     determining whether the free first storage location exists in the first shelving unit; and
     the determining the free first storage location as the target storage location when it is determined that the free first storage location exists comprises:

when it is determined that the free first storage location exists in the first shelving unit, determining the free first storage location in the first shelving unit as the target storage location.

33. The case storage method according to claim 32, wherein the shelf of the first shelving unit is able to be locked to a first storage location mode, the first storage location mode being a mode in which the first storage location is provided and the second storage location is not provided; and

the determining whether the free first storage location exists in the first shelving unit comprises: determining whether the shelf of the first shelving unit comprises a shelf locked to the first storage location mode; and when it is determined that the shelf of the first shelving unit comprises a shelf locked to the first storage location mode, determining whether the free first storage location exists in the shelf locked to the first storage location mode.

34. The case storage method according to claim 32, wherein the first shelving unit is able to be locked to a first storage location mode, the first storage location mode being a mode in which the first storage location is provided and the second storage location is not provided; and

the determining whether the free first storage location exists in the first shelving unit comprises: determining whether the first shelving unit comprises a first shelving unit locked to the first storage location mode; and when it is determined that the first shelving unit comprises a first shelving unit locked to the first storage location mode, determining whether the free first storage location exists in the first shelving unit locked to the first storage location mode.

35. The case storage method according to claim 32, wherein the shelf of the first shelving unit is able to be locked to a storage location mode, the storage location mode being a mode in which one type of storage location is provided and no other storage location is provided, the storage location mode comprising a first storage location mode, and the first storage location mode being a mode in which the first storage location is provided and the second storage location is not provided;

the determining whether the free first storage location exists in the first shelving unit comprises:

determining whether the shelf of the first shelving unit comprises a shelf not locked to a storage location mode; and when it is determined that the shelf of the first shelving unit comprises a shelf not locked to a storage location mode, determining whether the free first storage location exists in the shelf not locked to a storage location mode; and

after the determining the free first storage location in the first shelving unit as the target storage location, the method further comprises:

locking, to the first storage location mode, a shelf in which the target storage location is located; or locking, to the first storage location mode, a shelving unit in which the target storage location is located.

36. The case storage method according to claim 35, wherein when it is determined that no shelf that is not locked to a storage location mode exists, determining whether the free first storage location exists in a shelf locked to another storage location mode, the another storage location mode being a storage location mode other than the first storage location mode.

37. The case storage method according to claim 32, wherein the shelving unit further comprises at least one second shelving unit, the second shelving unit having a plurality of first storage location, the second shelving unit being provided with a plurality of second identification members for a recognition device to recognize the first storage locations, and the plurality of second identification members being in a one-to-one correspondence with the plurality of first storage locations; and

before the determining whether the free first storage location exists in the first shelving unit, the method further comprises: determining whether the free first storage location exists in the second shelving unit; when it is determined that the free first storage location exists in the second shelving unit, determining the free first storage location in the second shelving unit as the target storage location; and when it is determined that the free first storage location does not exist in the second shelving unit, performing the step of determining whether the free first storage location exists in the first shelving unit.

38. A case storage apparatus, comprising:

an acquisition module, configured to acquire target size information of a to-be-stored case;

a determining module, configured to determine a target storage location in a shelving unit based on the target size information, the target storage location being a storage location corresponding to the target size information, the shelving unit comprising at least one first shelving unit, the first shelving unit comprising a shelf and a plurality of first identification members arranged on the shelf, the shelf having a plurality of storage locations, the plurality of storage locations comprising a plurality of first storage locations arranged along a first direction and a plurality of second storage locations arranged along the first direction, the first storage location and the second storage location having different sizes along the first direction, the first storage location and the second storage location occupying a same area of the shelf, and the plurality of first identification members being in a one-to-one correspondence with the plurality of storage locations; and

a control module, configured to control a warehousing robot to transport and store the to-be-stored case to the target storage location.

39. A case storage device, comprising at least one processor and a memory,

the memory is configured to store computer-executable instructions; and
the at least one processor is configured to execute the computer-executable instructions stored in the memory, so that the at least one processor performs the method according to any one of claims 11 to 20 or claims 30 to 37.

40. A computer-readable storage medium, the computer-readable storage medium storing computer-executable instructions, and the case storage method according to any one of claims 11 to 20 or claims 30 to 37 being implemented when a processor executes the computer-executable instructions.

Figure 1

Figure 2

Figure 3

(a)

(b)

Figure 4

Figure 5

Figure 6

100

Figure 7

100

Figure 8

901

Acquire target size information of a to-be-stored case

902

Determine target storage space based on the target size information, the target storage space being storage space corresponding to the target size information in a plurality of shelving units of a warehousing system

903

Control a warehousing robot to transport and store the to-be-stored case to the target storage space

Figure 9

300

First case storage apparatus

301

First acquisition module

302

First determining module

303

First control module

Figure 10

Figure 11

Figure 12

Figure 13

Figure 14

<u>200</u>

Figure 15

<u>200</u>

Figure 16

## 200

Figure 17

| 1801 |
|---|
| Acquire target size information of a to-be-stored case |

| 1802 |
|---|
| Determine a target storage location in a plurality of shelving units based on the target size information, the target storage location being a storage location corresponding to the target size information |

| 1803 |
|---|
| Control a warehousing robot to transport and store the to-be-stored case to the target storage location |

Figure 18

400

Second case storage apparatus

401

Second acquisition module

402

Second determining module

403

Second control module

Figure 19

500

502

Case storage device

Memory

503

Computer-executable
instructions

501

Processor

Figure 20

## INTERNATIONAL SEARCH REPORT

| International application No. |
|---|
| **PCT/CN2023/071957** |

| **A.** | **CLASSIFICATION OF SUBJECT MATTER** |
|---|---|
| | B65G1/137(2006.01)i; B65G1/04(2006.01)i |

According to International Patent Classification (IPC) or to both national classification and IPC

| **B.** | **FIELDS SEARCHED** |
|---|---|

Minimum documentation searched (classification system followed by classification symbols)

IPC:B65G

Documentation searched other than minimum documentation to the extent that such documents are included in the fields searched

Electronic data base consulted during the international search (name of data base and, where practicable, search terms used)

CJFD, CNTXT, WPABS, DWPI, VEN: 仓储, 仓库, 货架, 不同, 尺寸, warehouse, shelf, different, size

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2022083219 A (MURATA MACHINERY, LTD.) 03 June 2022 (2022-06-03) description, paragraphs 0015-0048, and figures 1-10 | 1-40 |
| A | JP H08231005 A (HITACHI, LTD.) 10 September 1996 (1996-09-10) entire document | 1-40 |
| A | JP 2003201003 A (FUJI PHOTO FILM CO., LTD.) 15 July 2003 (2003-07-15) entire document | 1-40 |
| A | DE 102019129124 A1 (AUDI AG et al.) 12 March 2020 (2020-03-12) entire document | 1-40 |
| A | EP 2479719 A2 (DEUTSCHE POST AG) 25 July 2012 (2012-07-25) entire document | 1-40 |
| A | JP H0281810 A (HITACHI, LTD. et al.) 22 March 1990 (1990-03-22) entire document | 1-40 |
| A | US 2006214792 A1 (ACCENTURE GLOBAL SERVICES GMBH) 28 September 2006 (2006-09-28) entire document | 1-40 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 August 2023** | **21 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/071957**

| Patent document cited in search report | | | Publication date (day/month/year) | Patent family member(s) | | | Publication date (day/month/year) |
|---|---|---|---|---|---|---|---|
| JP | 2022083219 | A | 03 June 2022 | None | | | |
| JP | H08231005 | A | 10 September 1996 | JP | 3300793 | B2 | 08 July 2002 |
| JP | 2003201003 | A | 15 July 2003 | None | | | |
| DE | 102019129124 | A1 | 12 March 2020 | DE | 102019129124 | B4 | 17 June 2021 |
| EP | 2479719 | A2 | 25 July 2012 | DE | 102011003027 | A1 | 26 July 2012 |
| | | | | EP | 2479719 | A3 | 28 November 2012 |
| JP | H0281810 | A | 22 March 1990 | None | | | |
| US | 2006214792 | A1 | 28 September 2006 | AU | 2006229665 | A2 | 05 October 2006 |
| | | | | AU | 2006229665 | A1 | 09 December 2010 |
| | | | | CA | 2601110 | A1 | 05 October 2006 |
| | | | | CA | 2601110 | C | 05 May 2015 |
| | | | | EP | 1872344 | A2 | 02 January 2008 |
| | | | | EP | 1872344 | A4 | 29 December 2010 |
| | | | | EP | 1872344 | B1 | 01 May 2013 |
| | | | | US | 7271724 | B2 | 18 September 2007 |
| | | | | WO | 2006104587 | A2 | 05 October 2006 |
| | | | | WO | 2006104587 | A3 | 22 November 2007 |

Form PCT/ISA/210 (patent family annex) (July 2022)